(19) Europäisches Patentamt
European Patent Office
Office européen des brevets

(11) **EP 2 084 703 B1**

(12) **EUROPEAN PATENT SPECIFICATION**

(45) Date of publication and mention
of the grant of the patent:
**01.05.2019 Bulletin 2019/18**

(51) Int Cl.:
**G10L 19/00** *(2013.01)*   **G10L 19/08** *(2013.01)*
**G11B 20/10** *(2006.01)*   **H04S 3/00** *(2006.01)*

(21) Application number: **07833119.6**

(86) International application number:
**PCT/KR2007/004805**

(22) Date of filing: **01.10.2007**

(87) International publication number:
**WO 2008/039045 (03.04.2008 Gazette 2008/14)**

(54) **APPARATUS FOR PROCESSING MIX SIGNAL AND METHOD THEREOF**

VORRICHTUNG ZUM VERARBEITEN EINES MISCHSIGNALS UND VERFAHREN DAFÜR

PROCÉDÉ PERMETTANT DE TRAITER DES SIGNAUX DE MIXAGE ET PROCÉDÉ CORRESPONDANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority:
**29.09.2006  US 848218 P**
**12.10.2006  US 829233 P**
**13.10.2006  US 829350 P**
**01.12.2006  US 868304 P**
**19.01.2007  US 885742 P**
**09.03.2007  US 894162 P**

(43) Date of publication of application:
**05.08.2009 Bulletin 2009/32**

(73) Proprietor: **LG Electronics Inc.**
**Seoul 150-010 (KR)**

(72) Inventors:
• **OH, Hyen O**
 **Seoul 137-724 (KR)**

• **JUNG, Yang Won**
 **Seoul 135-270 (KR)**
• **YOON, Sung Yong**
 **Seoul 137-724 (KR)**

(74) Representative: **Katérle, Axel**
**Wuesthoff & Wuesthoff**
**Patentanwälte PartG mbB**
**Schweigerstraße 2**
**81541 München (DE)**

(56) References cited:
**EP-A- 1 853 092    WO-A-2006/048226**
**WO-A-2006/084916   WO-A-2007/080212**
**WO-A1-03/090207    JP-A- 2004 170 610**
**US-A- 5 974 380    US-A- 6 141 446**

• **BREEBAART ET AL.: 'MPEG Spatial Audio Coding/MPEG Surround: Overview and Current Status' AUDIO ENGINEERING SOCIETY OF THE 119TH CONVENTION, NEW YORK 07 October 2005 - 10 October 2005, pages 1 - 17, XP002379094**

**Description**

TECHNICAL FIELD

The present invention relates to a method and apparatus for processing a signal, and more particularly, to an apparatus for processing a signal and method thereof.

Although the present invention is suitable for a wide scope of applications, it is particularly suitable for encoding or decoding a mix signal such as an audio signal and a video signal.

BACKGROUND ART

Generally, stereo signals are most frequently generated and most widely used by consumers. Recently, multi-channel signals tend to be popularly used. Yet, limitation is put on mix signals which are processed not by a source signal unit but by a channel signal unit. So, in case of processing a mix signal by a channel signal unit, it is unable to independently process a specific source signal configuring the mix signal.

However, for instance, it is impossible to raise a volume of background music only while a volume for actors' voices is maintained uniform in viewing a movie. And, there is a problem in storing side information because a method of configuring a bitstream of the side information has not been prepared.

In case that a media signal is stored in a recording medium, an auxiliary data area for storing side information for the media signal may not exist. In this case, there is a problem in that the media signal has difficulty in being processed by a source signal unit. And, there is also a problem in compatibility with a general audio signal format in case of storing or transporting side information separately.

Moreover, after a user has reproduced a mix signal by remixing a mix signal (or synthetic source signal) per a source, i.e., per a source signal, if the user attempts to play back a previously remixed mix signal later, control information having been inputted has to be re-inputted intact.

Besides, since a mix signal is processed by a channel unit, it is impossible to replace a source signal included in the mix signal by a specific source signal provided by a user.

WO 2006/084916 A2 discloses a method for jointly coding a number of audio source signals considering statistical properties of the source signals.

DISCLOSURE OF THE INVENTION

TECHNICAL PROBLEM

Accordingly, the present invention is directed to an apparatus for processing a mix signal and method thereof that substantially obviate one or more of the problems due to limitations and disadvantages of the related art.

An object of the present invention is to provide a method of generating a remix signal using a mix signal and side information.

Another object of the present invention is to provide an apparatus for controlling a mix signal in remixing the mix signal and method thereof, by which control information inputted by a user is stored to be used in remixing the mix signal.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

TECHNICAL SOLUTION

To achieve these and other advantages and in accordance with the purpose of the present invention, a signal processing method according to claim 1 is provided. The method includes obtaining an identification information of a mix signal, obtaining a source control information matched to the identification information, and generating a remix signal using the source control information and the mix signal.

To further achieve these and other advantages and in accordance with the purpose of the present invention, a signal processing apparatus in accordance with claim 2 is provided. The apparatus may be interconnected to a processor of a mix signal and includes a memory storing a source control information per an identification information of the mix signal and a control unit read-outing the source control information matched to the mix signal based on the identification information of the mix signal, the control unit outputting the read source control information to the processor of the mix signal.

It is to be understood that both the foregoing general description and the following detailed description are exemplary and explanatory and are intended to provide further explanation of the invention as claimed.

ADVANTAGEOUS EFFECTS

In a signal processing method and apparatus according to the present invention, in remixing a mix signal, control information inputted by a user is stored. The stored control information is usable in remixing the mix signal. Hence, the mix signal remixed by a user to fit user's taste can be repeatedly played back without separate manipulations.
In a signal processing method and apparatus according to the present invention, a decoder is able to generate a signal parameter per source using a mix signal. And, the present invention generates a mix signal synthesized with a source signal directly generated by a user.

DESCRIPTION OF DRAWINGS

The accompanying drawings, which are included to provide a further understanding of the invention, illustrate embodiments of the invention and together with the description serve to explain the principles of the invention.
In the drawings:

FIG. 1 is a block diagram of a first signal processing apparatus;
FIG. 2 is a detailed block diagram of the first signal processing apparatus shown in FIG. 1 in case of using a stereo signal;
FIG. 3 is a graph of a domain for processing a media signal;
FIG. 4 is a block diagram of a second signal processing apparatus;
FIG. 5 is a block diagram of a third signal processing apparatus;
FIG. 6 is a detailed block diagram of the third signal processing apparatus shown in FIG. 5 in case of using a stereo signal;
FIG. 7 is a block diagram of a fourth signal processing apparatus;
FIG. 8 is a block diagram of a combined configuration of a general encoding device and a signal processing apparatus;
FIG. 9 is a block diagram of a combined configuration of a general decoding device and a signal processing apparatus;
FIG. 10 is a block diagram of a fifth signal processing apparatus;
FIG. 11 is a diagram of a data structure including a mix signal bitstream and a side information bitstream;
FIG. 12 is a detailed diagram of a data structure of the side information bitstream shown in FIG. 10;
FIG. 13 is a block diagram of a sixth signal processing apparatus;
FIG. 14 is a detailed block diagram of an embedding unit configuring the sixth signal processing apparatus shown in FIG. 13;
FIG. 15 is a diagram for a method of embedding side information ;
FIG. 16 is a diagram of a data structure of reshaped side information;
FIG. 17 is a block diagram of a seventh signal processing apparatus for decoding an audio signal using embedded side information;
FIG. 18 is a detailed block diagram of an eighth signal processing apparatus for embedding side information by preserving an original signal;
FIG. 19 is a diagram for a method of embedding side information by preserving an original signal;
FIG. 20 is a block diagram of an eighth signal processing apparatus for reconstructing an original signal completely;
FIG. 21 is a diagram for a first method of embedding side information in an audio signal of two channels;
FIG. 22 is a diagram for a second method of embedding side information in an audio signal of two channels;
FIG. 23 is a block diagram of a ninth signal processing apparatus for removing embedded side information;
FIG. 24 is a block diagram of a tenth signal processing apparatus for generating a bitstream of a mix signal having side information embedded therein;
FIG. 25 is a detailed block diagram of the tenth signal processing apparatus shown in FIG. 24;
FIG. 26 is a block diagram of an eleventh signal processing apparatus for embedding side information in a mix signal;
FIG. 27 is a block diagram of an eleventh signal processing apparatus for controlling a mix signal;
FIG. 28 is a diagram to explain start point information, end point information, and gain factors at the start and end points in case of a panning effect;
FIG. 29 is a diagram to explain start point information, end point information, and gain factors at the start and end points in case of a fading effect;
FIG. 30 and FIG. 31 are exemplary diagrams of screens pictures for representing lists of source control information;
FIG. 32 is a block diagram of a twelfth signal processing apparatus for controlling a mix signal according to one embodiment of the present invention;

FIG. 33 is a flowchart for a method of processing a mix signal according to one embodiment of the present invention;
FIG. 34 is a diagram of a process for generating to use source control information;
FIG. 35 is a block diagram of a thirteenth signal processing apparatus for controlling a mix signal;
FIG. 36 is a flowchart for a method of processing a mix signal;
FIG. 37 is a block diagram of a fourteenth signal processing apparatus for controlling a mix signal;
FIG. 38 is a flowchart for a method of processing a mix signal;
FIG. 39 is a flowchart for a method of generating side information;
FIG. 40 is a block diagram of a fifteenth signal processing apparatus for replacing a specific source signal;
FIG. 41 is a block diagram of a sixteenth signal processing apparatus;
FIG. 42 is a block diagram of a seventeenth signal processing apparatus;
FIG. 43 is an internal block diagram of a mix signal transforming unit;
FIG. 44 is a diagram for a method of processing a signal using a source signal providing server;
FIG. 45 is a flowchart for a method of transforming a mix signal; and
FIG. 46 is a flowchart for a method of transforming a mix signal.

## MODE FOR INVENTION

Reference will now be made in detail to preferred embodiments of the present invention, examples of which are illustrated in the accompanying drawings.

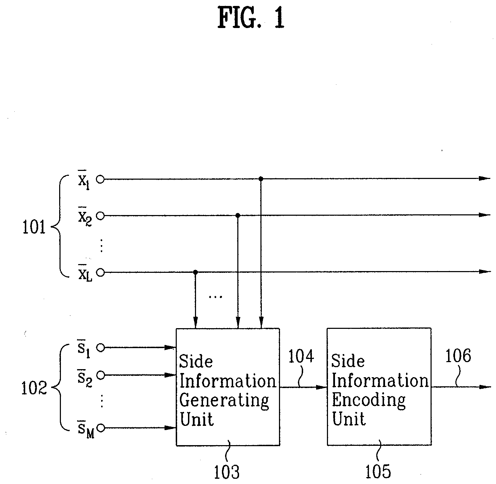

FIG. 1 is a block diagram of a first signal processing apparatus.

Referring to FIG. 1, a first signal processing apparatus includes a side information generating unit 103 and a side information encoding unit 105.

The side information generating unit 103 generates side information 104 using a general mix signal 101 and a source signal 102 configuring the mix signal.

The mix signal 101 can include a mono, stereo or multi-channel audio signal.

The source signal 102 can include a portion or whole part of source signals configuring the mix signal 101.

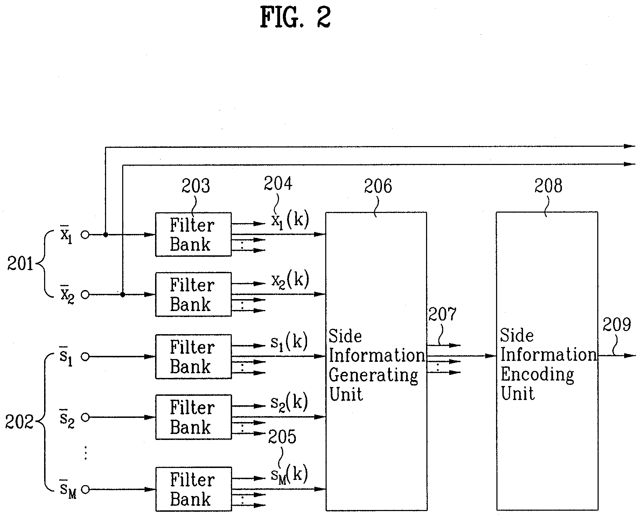

And, the side information 104 means information used in processing the mix signal by a source signal unit. The side information 104 includes a mix parameter for remixing the mix signal. The mix parameter includes an encoder mix parameter generated by an encoder using a source signal and may selectively include a blind mix parameter generated using a mix signal only. A gain value for each source signal, a subband power, and the like can be examples of the mix parameter. A specific definition and generation method for the side information 104 will be described in FIG. 2.

The side information 104 is generated using the source signal 102 configuring the mix signal only.

And, the side information encoding unit 105 generates an encoded side information signal 106 by encoding the generated side information 104. The mix signal 101 and the side information signal 106 are transferred to a decoding device.

FIG. 2 is a detailed block diagram of the first signal processing apparatus shown in FIG. 1 in case of using a stereo signal. As mentioned in the foregoing description, a mix signal can include a mono, stereo or multi-channel audio signal. For clarity and convenience, a stereo signal 201 is taken as an example.

The stereo signal 201 $\overline{x_1}(n)$ and $\overline{x2}(n)$ can be represented as a sum of source signals constructing the stereo signal, where 'n' indicates a time index. Hence, the stereo signal 201 can be represented as Formula 1.

[Formula 1]

$$\tilde{x}_1(n) \;=\; \sum_{i=1}^{I} a_i \tilde{s}_i(n)$$

$$\tilde{x}_2(n) \;=\; \sum_{i=1}^{I} b_i \tilde{s}_i(n) ,$$

In this case, 'I' indicates the number of source signals included in the stereo signal and '$\overline{s}_i(n)$' indicates a source signal. And, '$a_i$' and '$b_i$' are values for determining an amplitude panning and a gain for each source signal, respectively. Each $\overline{s}_i(n)$ is independent. Every $\overline{s}_i(n)$ can be a pure source signal or can include a pure source signal to which little reverberation and sound effect signal components are added. For instance, a specific reverberation signal component can be represented a two source signal, i.e., a signal mixed to a left channel and a signal mixed to a right channel.

The object is to modify a stereo signal including source signals in order to remix M source signals ($0 \leq M \leq I$).

The source signals can be remixed into a stereo signal with different gain factors. A remix signal can be represented as Formula 2.

[Formula 2]

$$\tilde{y}_1(n) = \sum_{i=1}^{M} c_i \tilde{s}_i(n) + \sum_{i=M+1}^{I} a_i \tilde{s}_i(n)$$

$$\tilde{y}_2(n) = \sum_{i=1}^{M} d_i \tilde{s}_i(n) + \sum_{i=M+1}^{I} b_i \tilde{s}_i(n),$$

In Formula 2, 'c$_i$' and "d$_i$' are new gain factors for M source signals to be remixed. The 'c$_i$' and 'd$_i$' can be provided by a decoder end. In this case, a side information generating unit 206 is able to generate side information 207 using the stereo signal 201 and M source signals 202.

As mentioned in the foregoing description, the object is to remix a general stereo signal by a source signal unit if the general stereo signal and small side information are given.

It is not possible to perfectly generate a remix signal represented as Formula 2 from a mix signal represented as Formula 1 using a very small quantity of side information.

So, without accessing each source signal $\bar{s}_i(n)$, in case that a general mix signal represented as Formula 1 is given, the object is to perceptually imitate a remix signal represented as Formula 2.

Referring to FIG. 2, a general stereo signal 201 and M source signals 202 included in the stereo signal 201 are inputted to a first signal processing apparatus. The stereo signal 201 is delayed to be synchronized with side information and is then directly usable as an output signal.

In order to generate side information, the stereo signal 201 and the source signals 202 are decomposed into signals per subband 204 and 205 in time-frequency domain through filter banks 203. In particular, the stereo signal 201 and the source signals 202 are processed in the time-frequency domain. And, the time-frequency domain will be explained later.

The signal per subband 204 is similarly processed on a center frequency of each subband. A subband pair 204 of the stereo signal 201 on a specific frequency is represented as $x_1(k)$ and $x_2(k)$. In this case, 'k' is a time index of each subband signal. Similarly, the subband signals 205 of the M source signals 202 are represented as $S_1(k)$, $S_2(k)$, ..., $S_M(k)$. For clarity, a subband (frequency) index is not used.

If the subband signals 205 of the source signals 202 are given, a side information generating unit 206 generates a short-time subband power per subband $E\{ s_i^2(k) \}$.

And, the side information generating unit 206 generates gain factors a$_i$ and b$_i$ per a subband using the subband pair 204 of the stereo signal 201. The gain factors a$_i$ and b$_i$ can be directly given from outside. Side information per subband 207 is generated using the short-time subband power per subband and the gain factors per subband.

The side information generating unit 206 can generate different information associated with the stereo signal as the side information 207 as well as the short-time subband power and the gain factors.

And, a side information encoding unit 208 generates an encoded side information signal 209 using the side information per subband 207.

For a number of stereo signals 201, gain factors a$_i$ and b$_i$ shall be fixed. If the gain factors a$_i$ and b$_i$ are variable in accordance with a time k, the gain factors will be generated as a function of time. Instead of being directly quantized and coded, the gain factors can be transformed into different values more suitable for quantization and coding.

And, $E\{ s_i^2(k) \}$ can be normalized into a value relative to a subband power of the stereo signal 201. This accomplishes strength against a change if a general encoding device is used to encode a stereo signal efficiently. For instance, a$_i$ and b$_i$ can be transformed into a gain and decibel (dB) unit level difference represented as Formula 3 and then transported.

[Formula 3]

$$g_i = 10\log_{10}(a_i^2 + b_i^2)$$
$$l_i = 20\log_{10}\frac{b_i}{a_i}.$$

And, instead of being directly encoded as side information, $E\{\ s_i^2(k)\ \}$ can be transformed into a value defined relative to a stereo signal, which is represented as Formula 4, and then transported.

[Formula 4]

$$A_i(k) = 10\log_{10}\frac{E\{s_i^2(k)\}}{E\{x_1^2(k)\} + E\{x_2^2(k)\}}.$$

To generate a short-time, single-pole averaging is used. Namely, $E\{\ s_i^2(k)\ \}$ can be calculated as Formula 5.

[Formula 5]

$$E\{s_i^2(k)\} = \alpha s_i^2(k) + (1 - \alpha)E\{s_i^2(k - 1)\},$$

In Formula 5, $\alpha \in [0,1]$ determines a time-constant of an estimation window that decreases exponentially as Formula 6.

[Formula 6]

$$T = \frac{1}{\alpha f_s},$$

In Formula 6, $f_s$ indicates a subband sampling frequency. For instance, it is able to use T=40 ms.

In the following description, $E\{\ \}$ indicates short-time averaging. If $a_i$ and $b_i$ are not given, they need to be generated by the side information generating unit 206. Since $E\{s_i(n)\overline{x}_1(n)\} = a_iE\{s_i^2(n)\}$, $a_i$ can be calculated by Formula 7.

[Formula 7]

$$a_i = \frac{E\{\tilde{s}_i(n)\tilde{x}_1(n)\}}{E\{\tilde{s}_i^2(n)\}}.$$

Similarly, $b_i$ can be calculated by Formula 8.

[Formula 8]

$$b_i = \frac{E\{\tilde{s}_i(n)\tilde{x}_2(n)\}}{E\{\tilde{s}_i^2(n)\}}.$$

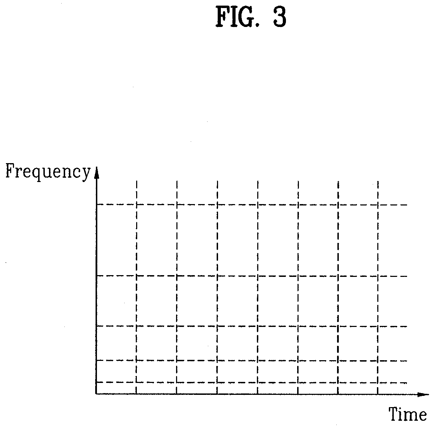

FIG. 3 shows a domain for processing a media signal.

As mentioned in the foregoing description, audio signal and side information are processed as a signal per subband in a time-frequency domain as shown in FIG. 3.

The signal per subband in the time-frequency domain is perceptually induced. For instance, it is able to generate a signal per subband using STFT (short time Fourier transform) having a sine analysis and synthesis window of about 20ms. In this case, STFT coefficients can be grouped in a manner that one group has a bandwidth about two times greater than ERB (equivalent rectangular bandwidth).

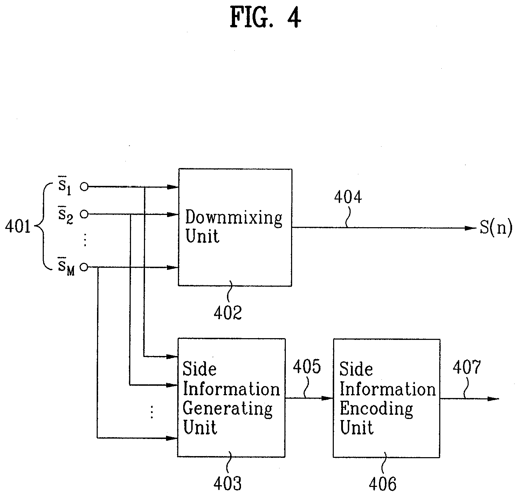

FIG. 4 is a block diagram of a second signal processing apparatus.

Referring to FIG. 4, a downmixing unit 406 generates a sum signal by adding a plurality of source signals 401 together. Unlike the first signal processing apparatus, a second signal processing apparatus transports the sum signal 404 instead of transporting a stereo signal.

A side information generating unit 403 generates side information 405 using the source signals 401. The side information 405 includes a subband power and a gain factor corresponding to each of the source signals. And, the side information 405 can include a parameter corresponding to a delay in a remix rendering unit. Similar to that in the first signal processing apparatus, the side information 405 can be transported by being transformed into a different value more suitable for quantization and encoding.

A side information encoding unit generates a side information signal 407 using the generated side information 405.

The generated sum signal 405 and the generated side information signal 407 are transported to a decoding device.

An encoding device may fail to have the downmixing unit 402. In this case, source signals 401 are not transformed into a sum signal 404 but are directly transported.

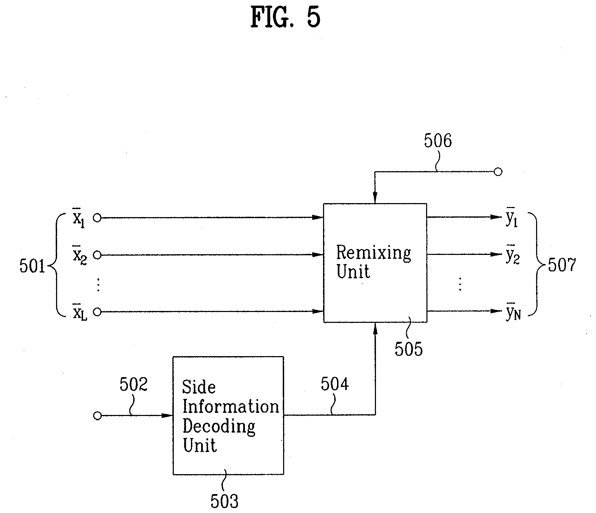

FIG. 5 is a block diagram of a third signal processing apparatus.

Referring to FIG. 5, a third signal processing apparatus includes a side information decoding unit 503 and a remix rendering unit 505.

A mix signal 501 and a side information signal 502 are inputted to the third signal processing apparatus. The mix signal 501 can include a mono, stereo or multi-channel audio signal.

The side information decoding unit 503 generates side information 504 by decoding the side information signal 502. The side information 504 includes gain factors and subband powers of source signals included in the transported audio signal 501.

A user-mix parameter 506 generated using control information directly provided by a user can be inputted to the remix rendering unit 505.

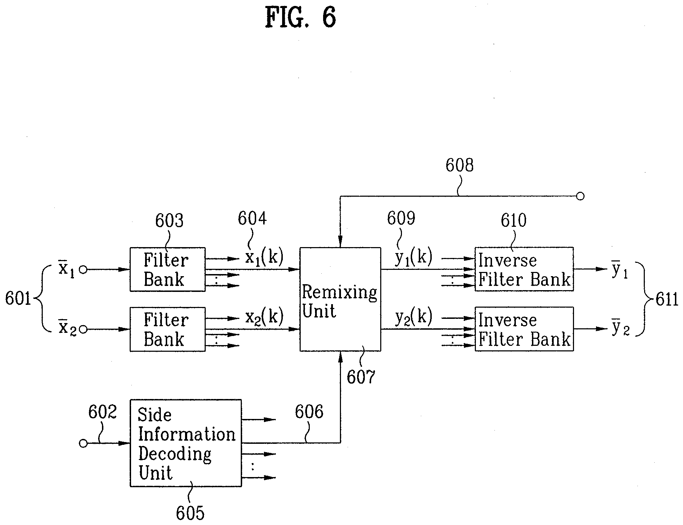

The remix rendering unit 505 generates a remix signal 507 using the mix signal 501, the transported side information 504, and the user-mix parameter 506. Details of a method for generating the remix signal will be explained later with reference to FIG. 6.

The remix signal 507 is generated into an eq-channel mix signal having a channel number equal to that of the transported mix signal or can be generated as an up-channel mix signal having a channel number greater than that of the mix signal.

FIG. 6 is a detailed block diagram of the third signal processing apparatus shown in FIG. 5 in case of using a stereo signal. As mentioned in the foregoing description, a transported mix signal can include a mono, stereo or multi-channel audio signal. For convenience, it is assumed that the transported mix signal includes a stereo signal 601.

Referring to FIG. 6, the stereo signal 601 is decomposed into signals per subband 604 in time-frequency domain via filter banks 603. The signals per subband 604 on a specific frequency are represented as $x_1(k)$ and $x_2(k)$, respectively.

A side information decoding unit 605 generates a side information per subband 606 by decoding a transported side information signal 602.

A user-mix parameter 608 generated using control information provided by a user can be inputted to a remix rendering unit 607. And, the user-mix parameter 608 can be provided per a subband.

As mentioned in the foregoing description, the side information 606 includes a subband power represented as gain factors per subband $a_i$ and $b_i$ and $E\{s_i^2(k)\}$ for M source signals to be remixed.

The remix rendering unit 607 generates a remix signal per subband 609 ($y_1$(k), $y_2$(k)) using the stereo signal 604 generated per the subband, the transported side information 606, and the user-mix parameter 608. A method of generating the remix signal 609 will be explained in detail. The remix signals 609 are transformed into a stereo signal ($\overline{y_1}$, $\overline{y_2}$) 611, in a time domain via inverse filter tanks 610.

A method of generating the remix signal 609 from the remix rendering unit 607 is explained as follows.

First of all, Formula 1 and Formula 2 are effective on the signals per subband 604 and 609. In this case, a source signal $\overline{s_i}(n)$ is replaced by a source signal per subband $\overline{s_i}(k)$.

[Formula 9]

$$x_1(k) = \sum_{i=1}^{I} a_i s_i(k)$$
$$x_2(k) = \sum_{i=1}^{I} b_i s_i(k),$$

The remix signals per subband 609 can be represented as Formula 10.

[Formula 10]

$$y_1(k) = \sum_{i=1}^{M} c_i s_i(k) + \sum_{i=M+1}^{I} a_i s_i(k)$$
$$y_2(k) = \sum_{i=1}^{M} d_i s_i(k) + \sum_{i=M+1}^{I} b_i s_i(k).$$

To generate the remix signal 609, least squares estimation can be used. If the mix signals per subband ($x_1$(k), $x_2$(k)) 604 are given, remix signals per subband 609 having different gains, as shown in Formula 11, can be estimated as a linear combination of the mix signals per subband 604.

[Formula 11]

$$\hat{y}_1(k) = w_{11}(k)x_1(k) + w_{12}(k)x_2(k)$$
$$\hat{y}_2(k) = w_{21}(k)x_1(k) + w_{22}(k)x_2(k),$$

In Formula 11, $w_{11}$(k), $w_{12}$(k), $w_{21}$(k) and $w_{22}$(k) are weight factors, respectively. In this case, generated estimation error can be defined as Formula 12.

[Formula 12]

$$e_1(k) = y_1(k) - \hat{y}_1(k)$$
$$= y_1(k) - w_{11}(k)x_1(k) - w_{12}(k)x_2(k)$$
$$e_2(k) = y_2(k) - \hat{y}_2(k)$$
$$= y_2(k) - w_{21}(k)x_1(k) - w_{22}(k)x_2(k).$$

The weight factors $w_{11}$(k), $w_{12}$(k), $w_{21}$(k) and $w_{22}$(k) can be generated per a subband to minimize mean square errors $E\{e_1^2(k)\}$ and $E\{e_2^2(k)\}$. For this, it is able to use a fact that the mean square error can be minimized when $e_1$(k) and $e_2$(k) become orthogonal to $x_1$(k) and $x_2$(k), respectively. The generated $w_{11}$(k) and $w_{12}$(k) can be represented as Formula 13.

[Formula 13]

$$w_{11} = \frac{E\{x_2^2\}E\{x_1y_1\} - E\{x_1x_2\}E\{x_2y_1\}}{E\{x_1^2\}E\{x_2^2\} - E^2\{x_1x_2\}}$$

$$w_{12} = \frac{E\{x_1x_2\}E\{x_1y_1\} - E\{x_1^2\}E\{x_2y_1\}}{E^2\{x_1x_2\} - E\{x_1^2\}E\{x_2^2\}}.$$

In Formula 13, $E\{x_1^2\}$, $E\{x_2^2\}$ and $E\{x_1x_2\}$ can be directly generated. Yet, $E\{x_1y_1\}$ and $E\{x_2y_1\}$ can be generated by Formula 14 using the transported side information 606 (e.g., $E\{s_i^2\}$, $a_i$, $b_i$) and the control information 608 (e.g., gain factors $c_i$ and $d_i$) provided by a user.

[Formula 14]

$$E\{x_1y_1\} = E\{x_1^2\} + \sum_{i=1}^{M} a_i(c_i - a_i)E\{s_i^2\}$$

$$E\{x_2y_1\} = E\{x_1x_2\} + \sum_{i=1}^{M} b_i(c_i - a_i)E\{s_i^2\}.$$

Similarly, $w_{21}$ and $w_{22}$ can be generated by Formula 15.

[Formula 15]

$$w_{21} = \frac{E\{x_2^2\}E\{x_1y_2\} - E\{x_1x_2\}E\{x_2y_2\}}{E\{x_1^2\}E\{x_2^2\} - E^2\{x_1x_2\}}$$

$$w_{22} = \frac{E\{x_1x_2\}E\{x_1y_2\} - E\{x_1^2\}E\{x_2y_2\}}{E^2\{x_1x_2\} - E\{x_1^2\}E\{x_2^2\}},$$

In Formula 15, $E\{x_1y_2\}$ and $E\{x_2y_2\}$ can be represented as Formula 16.

[Formula 16]

$$E\{x_1y_2\} = E\{x_1x_2\} + \sum_{i=1}^{M} a_i(d_i - b_i)E\{s_i^2\}$$

$$E\{x_2y_2\} = E\{x_2^2\} + \sum_{i=1}^{M} b_i(d_i - b_i)E\{s_i^2\}.$$

If phases of the mix signal 604 are coherent to each other or almost become coherent, a value represented as Formula 17 approximates 1.

[Formula 17]

$$\phi = \frac{E\{x_1x_2\}}{\sqrt{E\{x_1^2\}E\{x_2^2\}}}$$

In this case, the weights can be represented as Formula 18.

[Formula 18]

$$w_{11} = \frac{E\{x_1y_1\}}{E\{x_1^2\}}$$

$$w_{12} = w_{21} = 0$$

$$w_{22} = \frac{E\{x_2y_2\}}{E\{x_2^2\}}.$$

As mentioned in the foregoing description, the above-generated remix signal per subband 609 is transformed into a remix signal 611 in time-frequency domain via the inverse filter bank 610.

The remix signal 611 sounds similar to a remix signal generated from remixing source signals independently using the user-mix parameters $c_i$ and $d_i$ generated using the control information provided by a user.

The remixing of the 2-channel stereo signal has been mainly dealt with so far. Yet, as mentioned in the foregoing description, the described methodology is applicable to the remixing of a multi-channel audio signal, e.g., 5.1-channel audio signal as well as to the stereo signal. It is apparent to those skilled in the art that a multi-channel audio signal can be remixed in a manner similar to that applied to the stereo signal described in this disclosure. If so, Formula 11 can be rewritten into Formula 19.

[Formula 19]

$$
\begin{aligned}
\hat{y}_1(k) &= \sum_{c=1}^{C} w_{1c}(k) x_c(k) \\
\hat{y}_2(k) &= \sum_{c=1}^{C} w_{2c}(k) x_c(k) \\
&\cdots \\
\hat{y}_C(k) &= \sum_{c=1}^{C} w_{Cc}(k) x_c(k).
\end{aligned}
$$

Selectively, a specific one of channels of a mix signal can remain intact without being remixed. For instance, remixing is applied to front channels of 5.1 surround channels while two rear channels are not modified. For this, 2- or 3-channel remixing algorithm is applied to front channels.

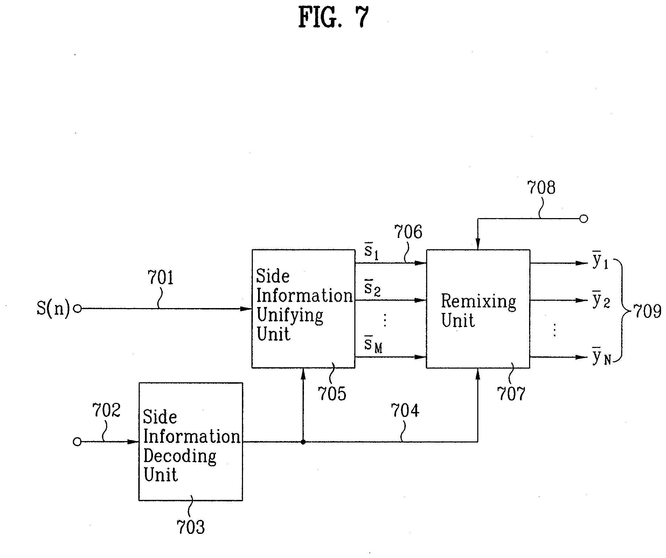

FIG. 7 is a block diagram of a fourth signal processing apparatus.

Referring to FIG. 7, a fourth signal processing apparatus includes a side information decoding unit 703, a spatial information unifying unit 705, and a remix rendering unit 707.

A sum signal 701 of source signals and a side information signal 702 are inputted to the fourth signal processing apparatus.

The side information decoding unit 703 generates side information 704 by decoding the side information signal 702. The side information 704 includes a gain factor, a delay constant, a subband power, and the like.

The side information unifying unit 705 separates the sum signal 701 into a plurality of source signals 706 using the side information 704.

The remix rendering unit 707 is able to generate a remix signal 709 using the source signals 706. In this case, the remix rendering unit 707 is able to generate the remix signal 709 using a mix parameter carried by the side information.

And, the remix rendering unit 707 is able to generate the remix signal 709 using a user-mix parameter 708 generated using control information provided by a user.

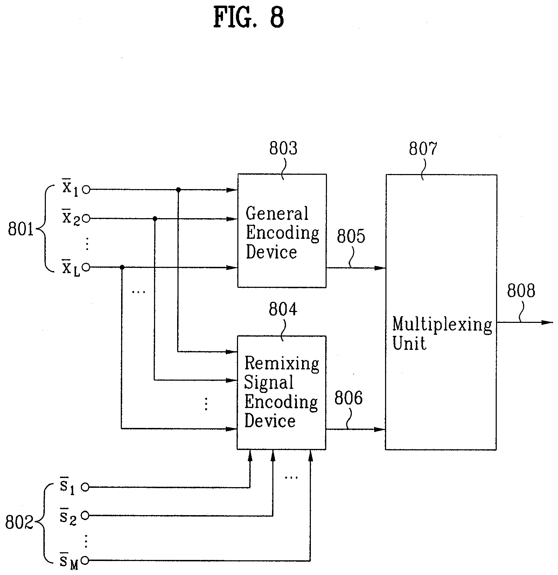

FIG. 8 is a block diagram of a combined configuration of a general encoding device and a signal processing apparatus.

Referring to FIG. 8, a mix signal 801 can be transformed into an encoded mix signal 805 by being encoded by a general encoding device 803. The mix signal 801 can include a signal per channel or a source signal. And, the general encoding device 803 includes an encoder to be developed in the future as well as a conventional encoder such as AAC, MP3 encoder and the like.

A remix signal encoding apparatus 804 generates a side information signal 806 using the mix signal 801 and a source signal 802 included in the mix signal.

A multiplexing unit 807 generates a bitstream 808 using the encoded mix signal 805 and the side information signal 806. As mentioned in the foregoing description, the side information signal 806 can be inserted in an auxiliary data area within a conventional mix signal format to have compatibility with conventional devices.

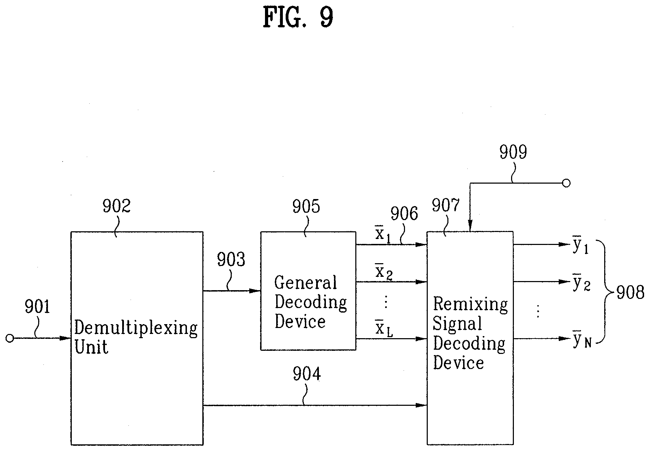

FIG. 9 is a block diagram of a combined configuration of a general decoding device and a signal processing apparatus.

Referring to FIG. 9, a demultiplexing unit 902 separates a transported bitstream 901 into an encoded mix signal 903 and a side information signal 904.

Subsequently, a general decoding device 905 generates a mix signal 906 usable for a remix signal decoding apparatus 907 by decoding the encoded mix signal 903. And, the general decoding device 905 includes a decoder to be developed in the future as well as a conventional decoder such as AAC, MP3 decoder and the like. The mix signal 906 can include a signal per channel or a source signal. The remix signal decoding apparatus 907 is able to transform the mix signal 906 into a remix signal 909 using at least one of the side information signal and a user-mix parameter 908.

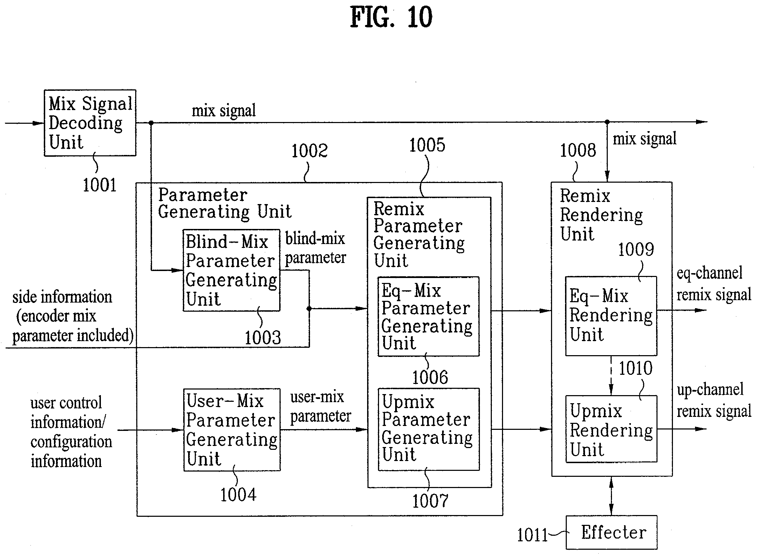

FIG. 10 is a block diagram of a fifth signal processing apparatus.

Referring to FIG. 10, a fifth signal processing apparatus includes a mix signal decoding unit 1001, a parameter generating unit 1002, and a remix rendering unit 1008. Optionally, the fifth signal processing apparatus may include an effecter 1011.

The parameter generating unit 1002 can include a blind-mix parameter generating unit 1003, a user-mix parameter generating unit 1004, and a remix parameter generating unit 1005.

The remix parameter generating unit 1005 includes an eq-mix parameter generating unit 1006 and may optionally include an upmix parameter generating unit 1007.

The remix rendering unit 1008 includes an eq-mix rendering unit 1009 and may optionally include an upmix rendering unit 1010.

The mix signal decoding unit 1001 generates a mix signal by decoding an encoded mix signal transported by an encoding end.

The parameter generating unit 1002 receives side information and user control information (or configuration information) transported by the encoding end. And, the user control information may be generated from a decoder end instead of being transported by the encoder end.

The user-mix parameter generating unit 1004 generates a user-mix parameter using the user control information. And, an encoder mix parameter may be included in the side information transported by the encoder end.

The blind-mix parameter generating unit 1003 is able to generate a blind-mix parameter using the mix signal. Either the encoder mix parameter or the blind-mix parameter can be selectively inputted to the remix parameter generating unit 1005.

The remix parameter generating unit 1005 generates a remix parameter using the side information and the user-mix parameter. The remix parameter can be generated to be applicable to a channel of the remix signal.

The eq-mix parameter generating unit 1006 included in the remix parameter generating unit 1005 generates a remix parameter used in generating a remix signal having a channel number equal to that of the mix signal.

And, the upmix parameter generating unit 1007 generates a remix parameter used in generating a remix signal having a channel number greater than that of the mix signal. The remix parameter is inputted to the remix rendering unit 1008.

The eq-mix rendering unit 1009 included in the remix rendering unit 1008 generates an eq-channel remix signal having a channel number equal to that of the mix signal using the remix parameter and the mix signal.

The upmix rendering unit 1010, which may be included in the remix rendering unit 1008, generates an up-channel remix signal having a channel number greater than that of the mix signal using the remix parameter generated from the upmix parameter generating unit 1007 and the mix signal. The upmix rendering unit 1010 can generate an up-channel remix signal using the remix signal generated from the eq-channel rendering unit 1009.

Hence, the fifth signal processing apparatus outputs the mix signal transported by the encoding end as it is, outputs the mix signal into the eq-channel remix signal, or outputs the mix signal into the up-channel remix signal. Optionally, using information provided by the effecter 1011, the remix rendering unit can give various effects to the remix signal.

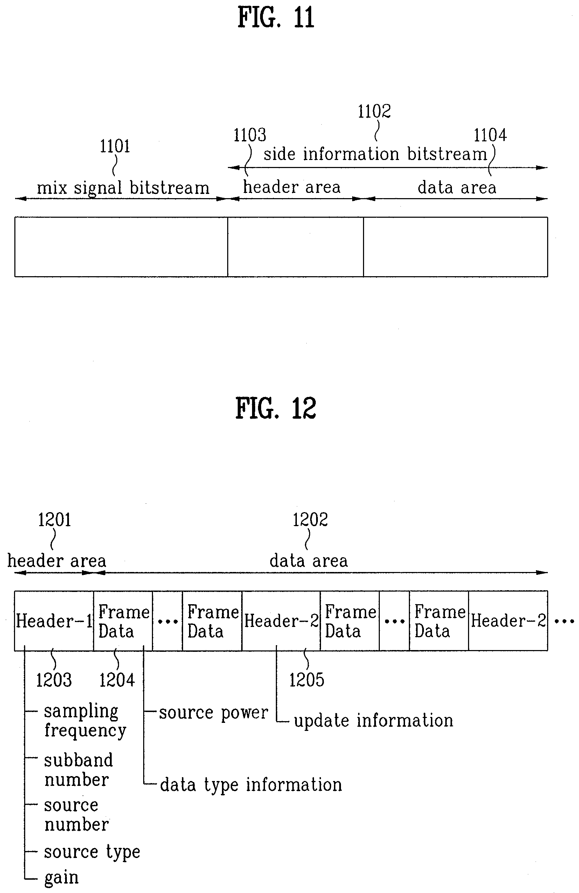

FIG. 11 is a diagram of a data structure including a mix signal bitstream and a side information bitstream. Referring to FIG. 11, the data structure includes a mix signal bitstream 1101 and a side information bitstream 1102. And, the side information bitstream 1102 includes a header area 1103 and a data area 1104. As mentioned in the foregoing description, a signal processing apparatus receives a bitstream having the data structure shown in FIG. 11. The signal processing apparatus obtains a mix signal including at least one source signal by decoding the mix signal bitstream 1101 and also obtains side information by decoding the side information bitstream 1102.

The side information includes information that indicates a relation between a source signal to be remixed among the at least one source signals and the mix signal. For instance, the side information includes a level information, time delay information, a cross correlation information, a mix information, and the like.

In this case, the level information may include a level of a source signal to be remixed and may also include either a relative level between source signals to be remixed or a relative level between a source signal to be remixed and a mix signal. And, a level of a mix signal can be additionally included in the side information.

The time delay information can include a time delay information between source signals to be remixed or a time delay information between a source signal to be remixed and a mix signal. The cross correlation information can include a cross correlation information between source signals to be remixed, a cross correlation information between a source signal to be remixed and a mix signal, or a cross correlation information between mix signals.

And, the mix information is the information indicating a degree that a specific source is mixed with a mix signal. For instance, if a specific source is attempted to have an effect in being located at a right side, a mix can be carried out in a manner that a right channel has a size greater than that of a left channel. Thus, the mix information can indicate a degree that each source is mixed with a corresponding channel. Moreover, the mix information can include information on a time delay associated with a mix, information on correlation, and the like as well as the size.

The signal processing apparatus is able to obtain a mix parameter from the side information bitstream 1102.

The mix parameter is generated using control information provided by a user. The mix parameter can be generated by an encoding device or a decoding device. In case that the mix parameter is generated by the decoding device, the decoding device receives control information from a user and then generated the mix parameter using the control information. The signal processing apparatus generates a remix signal using the mix signal, the side information, and the mix parameter. In the following description, information included in the side information bitstream is described.

FIG. 12 is a detailed diagram of a data structure of the side information bitstream shown in FIG. 10.

Referring to FIG. 12, a header are includes a header-1 1203, and a data area 1202 includes a plurality of frame data 1204 and a plurality of headers-2 1205. High-level information such as a name of a source signal included in a mix signal, a characteristic of a source signal, a reproducing method, and the like is included in the header-1 1203.

And, the header-1 1203 can include a gain of a source signal, the number of source signals, a subband number, and the like. And, the header-1 1203 can optionally include a source signal reproducing/configuring method. For instance, the header-1 1203 can provide the reproducing/configuring method by including a predetermined user-mix parameter optionally.

Moreover, the header-1 1203 can optionally include a remixing range for a gain and panning.

The signal processing apparatus generates a remix signal using a mix signal, side information, and a user-mix parameter. In this case, a control of a proper extent, e.g., adjustment of energy of a specific source signal by +20dB~-20dB, has little influence on a quality of reproduction. Yet, if energy of a specific source signal is completely suppressed or excessively modified, a quality of reproduction may be degraded.

So, a method of securing a quality of reproduction by setting a maximum gain attenuation level adjustable in a signal processing apparatus is proposed. For instance, a method of enabling the attenuation up to -40dB maximum can be used. In this case, if a user adjusts the attenuation level to -80dB, a decoding device does not perform the corresponding adjustment but actually operates to perform the attenuation up to -40dB only. In doing so, it can be announced that the attenuation is carried out up to a predetermined level only instead of performing the attenuation instructed by a user.

The frame data 1204 can include a normalized source power within each subband. And, the frame data 1204 can include information on a data type included in each frame.

For instance, in case of a first data type, the frame data 1204 includes minimum information. For instance, the frame data 1204 can include a source power association with side information only.

In case of a second data type, the frame data 1204 includes gains additionally updated. This is useful for a case that a remix signal is generated using non-static mixing gains varying in accordance with time.

In case of a third or fourth data type, the frame data 1204 can be assigned as a reserved area for a future use. In case that the bitstream is used for broadcasting, the reserved area can include information required for matching a tuning of a broadcast signal (e.g., sampling frequency, subband number, etc..

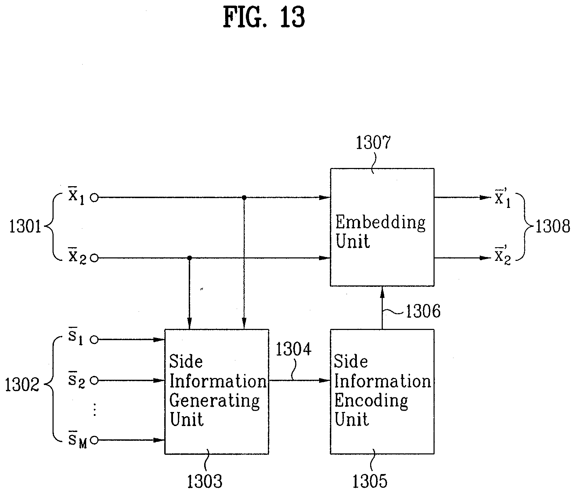

FIG. 13 is a block diagram of a sixth signal processing apparatus.

Referring to FIG. 13, a sixth signal processing apparatus includes a side information generating unit 1303, a side information encoding unit 1305, and an embedding unit 1307.

A mix signal 1301 and a source signal 1302 are inputted to the sixth signal processing apparatus. As mentioned in the foregoing description, the mix signal 1301 can include a mono, stereo or multi-channel audio signal. For convenience, the description is made with reference to the stereo signal.

The side information generating unit 1303 generates side information 1304 using the mix signal 1301 and the source signal 1302. n this case, the side information 1304 includes mix information indicating a degree that a source signal included in the mix signal is mixed with a mix signal channel, time delay information between source signals included in the mix signal or time delay information between the source signal and the mix signal channel, and cross correlation information between source signals included in the mix signal or cross correlation information between the source signal and the mix signal channel.

The side information encoding unit 1305 generates a side information signal 1306 for transmission and storage using the side information 1304.

And, the embedding unit 1305 embeds the side information signal 1306 in the mix signal 1301. For this case, 'digital signal embedded method' is usable. If the 'digital signal embedded method' is used, it is able to embed side information in a PCM type mix signal 1301 without sound quality distortion.

The mix signal having the side information embedded therein is not almost discriminated from an original mix signal perceptually. In particular, an output signal ($\overline{x_1}$' and $\overline{x_2}$') 1308 having side information embedded therein can be regarded equivalent to the input signal ($\overline{x_1}$ and $\overline{x_2}$) 1301 in a decoding device.

The 'digital signal embedded method' includes bit replacement coding method, echo hiding method, spread-spectrum based method, or the like.

The bit replacement coding method includes the step of inserting specific information by modifying lowers bits of a quantized mix signal sample and uses the characteristic that modification of lowest bits barely affects a quality of a mix signal.

The echo hiding method includes the step of inserting echo having a size enough not to be heard by a human ear in a mix signal.

The spread-spectrum-based method includes transforming a mix signal into a frequency domain signal by discrete cosine transform, discrete Fourier transform or the like, performing spectrum spreading on specific binary information into PN (pseudo noise) sequence, and adding the PN sequence in the frequency-domain transformed mix signal.

In the following description, the bit replacement coding method among the embedded methods will be mainly explained.

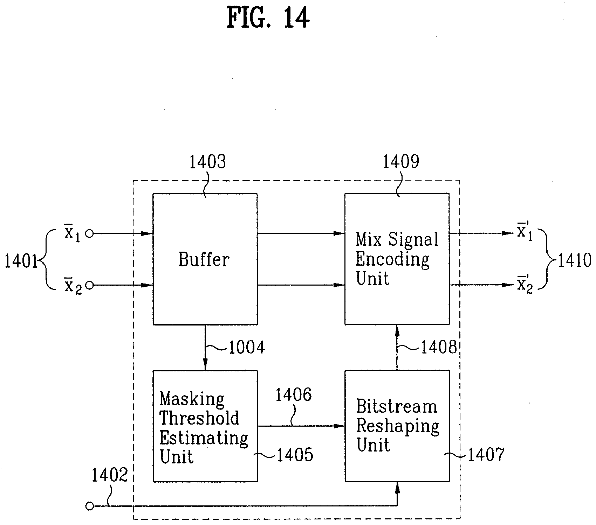

FIG. 14 is a detailed block diagram of an embedding unit configuring the sixth signal processing apparatus shown in FIG. 13.

Referring to FIG. 14, the embedding unit 1307 includes a buffer 1403, a masking threshold estimating unit 1405, a bitstream reshaping unit 1407, and a mix signal encoding unit 1409.

By the bit replacement coding method, side information can be embedded in a non-perceptual area of a mix signal component. In this case, K bit(s) (K>0) in a specific area is usable as a size of the non-perceptual area (hereinafter called K) in accordance with a pre-decided method as well as a least 1 bit. For instance, the pre-decided method includes finding a masking threshold in accordance with a psychoacoustic model and allocation proper bits in accordance with the masking threshold.

Referring to FIG. 14, a mix signal 1401 is inputted to the mix signal encoding unit via the buffer 1403.

The masking threshold estimating unit 1405 finds a masking threshold per a predetermined section (e.g., block) using information 1404 on a characteristic of the inputted mix signal 1401. And, the masking threshold estimating unit 1405 finds a value K capable of modification without generation of aural distortion using the masking threshold. In particular, a bit number usable in embedding the side information 1402 in the mix signal 1401 is allocated per a block.

In this disclosure, 'block' indicates a data unit inserted using a single K value existing within a frame. At least one blocks can exist within a single frame. Hence, if a length of the frame is fixed, a length of block can be in inverse proportion to the number of blocks.

The bitstream reshaping unit 1407 can reshape the side information to include the K. In this case, sync word, error detection code, error correction code and the like can be included in the reshaped side information.

The mix signal encoding unit 1409 embeds the reshaped side information 1408 in the mix signal 1401 and then outputs a side information embedded mix signal 1410.

As mentioned in the foregoing description, the reshaped side information 1408 can be embedded within K bits of the mix signal. A value of the K is inserted in the reshaped side information 1408 and is then transported to a decoding device. The decoding device is then able to extract side information from a mix signal using the K value.

Side information can be embedded per a block in a mix signal by one of various methods.

The first method includes substituting lower K bits of the mix signal with 0 and add side information thereto. For instance, if K is 3, if sample data of a mix signal is 11101101, and if side information data to be embedded is 111, lower 3 bits of 11101101 is substituted with 0 to generate 11101000 and the side information data 111 is added thereto to generate 11101111.

The second method uses dithering and includes the step of subtracting side information data from lower K bits of the mix signal, re-quantizing the mix signal based on a value of K, and adding side information data to the re-quantized mix signal. For instance, if the value of K is 3, if sample data of a mix signal is 11101101, and if side information data to be embedded is 111, 111 is subtracted from 11101101 to generate 11100110. Re-quantization is performed on bits above lower 3 bits to generate 11101000 (rounding-off). Subsequently, 111 is added to 11101000 to generate 1101111.

Since side information embedded in the mix signal is a random bitstream, it may not have white noise characteristics. Since it is advantageous that a white nose type signal is added to a mix signal in aspect o sound quality characteristics, side information is whitened and then added to the mix signal. The whitening is applicable to a side information signal except sync word.The whitening means that a random signal having a volume or sound level of a mix signal, which is equal or almost similar in all frequency domain, is made.

In a process for embedding side information in a mix signal, it is able to minimize aural distortion by applying noise shaping scheme to the side information. Noise shaping means a process for modifying noise characteristics in a manner that energy of quantized noise generated from quantization is shifted to a high frequency band over an audible frequency band. And, the noise shaping also means a process including finding a masking threshold from a corresponding mix signal, generating a time-varying filter corresponding to the masking threshold, and modifying characteristics of noise generated from quantization using the generated filter.

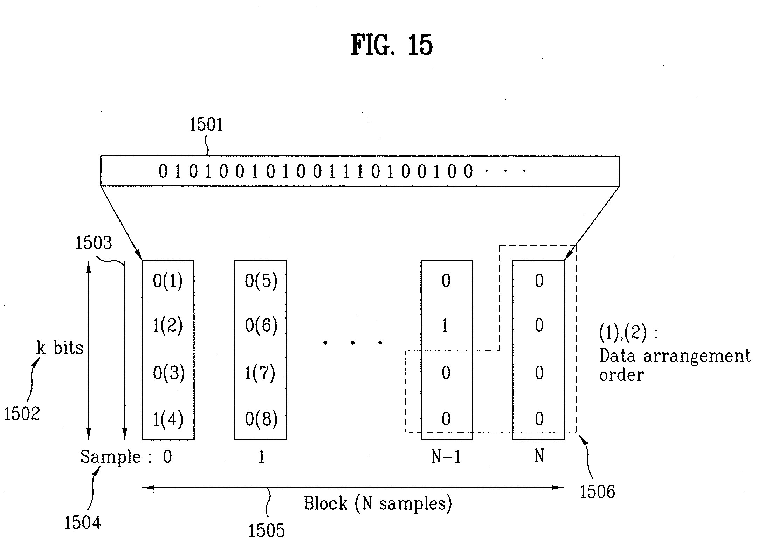

FIG. 15 is a diagram for a method of embedding side information.

Side information can be embedded in a mix signal in various ways. And, FIG. 15 shows a method of embedding side information in order of sample plane. The embedding method is carried out in a manner of distributing side information for a corresponding block by K-bit unit.

Referring to FIG. 15, if a value of K is 4 and if a single block1505 is constructed with N samples 1504, side information can be embedded in lower 4 bits of each of the samples. As mentioned in the foregoing description, the described concept is not just limited to the method of embedding side information in lower 4 bits of each sample.

Within lower K bits of each sample, side information, as shown in FIG. 15, can be embedded from MSB (most significant bit) first or LSB (least significant bit) first.

An arrow 1503 shown in the drawing indicates a direction of embedding and a numeral within a parenthesis indicates a data arrangement order.

In case that a bit number of side information to be embedded is smaller than an embeddable bit number in an area in which side information is embedded, remaining bits are padded with 0 (1506), a random signal is inserted therein, or the remaining bits are replaced by an original mix signal.

For instance, if a number (N) of samples constructing a block is 100 and if K is 4, a number (W) of bits embeddable in the block is 400 bits (WN*K=100*4=400).

In case that a number (V) of bits of side information to be embedded is 390bits (i.e., V < W), the remaining 10 bits are padded with 0, a random signal is inserted therein, the remaining 10 bits are replaced by an original mix signal, the remaining 10 bits are padded with a tail sequence, or the remaining 10 bits are padded with an combination thereof. The tail sequence means a bit sequence that indicates an end of side information in a corresponding block. Although FI. 15 shows that remaining bits per a block are padded, remaining bits may be padded per an insertion frame by the above-explained methods.

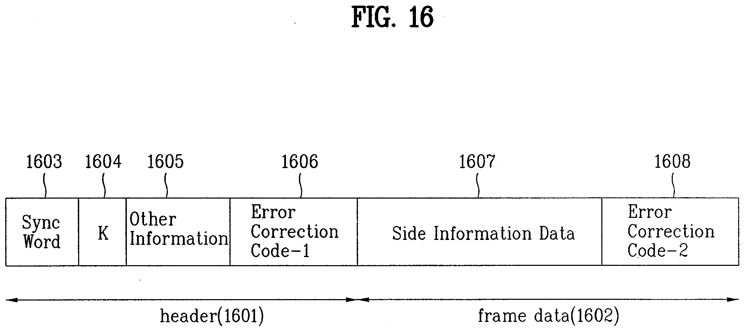

FIG. 16 is a diagram of a data structure of reshaped side information.

Referring to FIG. 16, as mentioned in the foregoing description, side information can be reshaped to include a sync word 1603 and a K value 1604 by a bitstream reshaping unit. In the reshaping process, at least one error detection or correction codes 1606 and 1608 (hereinafter described as an error correction code only) capable of deciding whether a side information signal is damaged or not in a transmission or storage process can be included in a reshaped side information signal.

The error correction code includes CRC (cyclic redundancy check). The error correction code can be included by two steps. In particular, an error correction code-1 1606 for a header 1601, in which K values are included, and an error correction code-2 1608 for side information data 1607 can be included. Besides, the rest information 1605 can be separately included in the side information signal. Identification information for a side information embedding method and the like can be included in the rest information 1605.

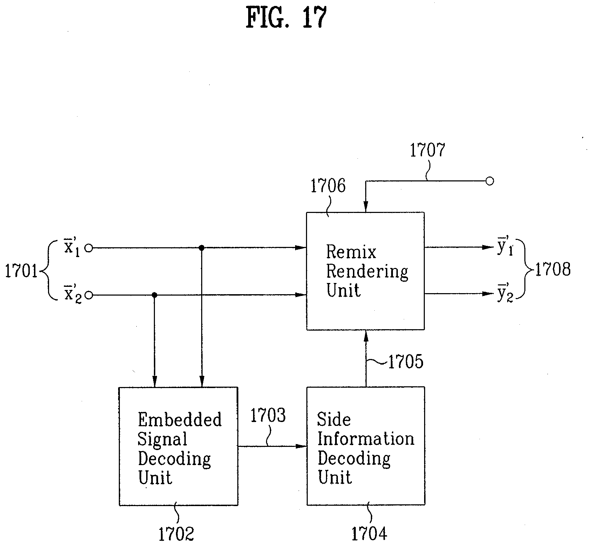

FIG. 17 is a block diagram of a seventh signal processing apparatus for decoding an audio signal using embedded side information.

Referring to FIG. 17, a seventh signal processing apparatus includes an embedded signal decoding unit 1702, a side information decoding unit 1704, and a remix rendering unit 1706.

The embedded signal decoding unit 1702 can detect a side information signal 1703 from a mix signal 1701.

The side information decoding unit 1704 generates side information 1705 by decoding the side information signal.

The remix rendering unit 1706 generates a remix signal 1708 using the side information 1705 and the mix signal 1701. In doing so, the remix rendering unit 1706 is able to use a user-mix parameter 1707 generated using control information provided by a user.

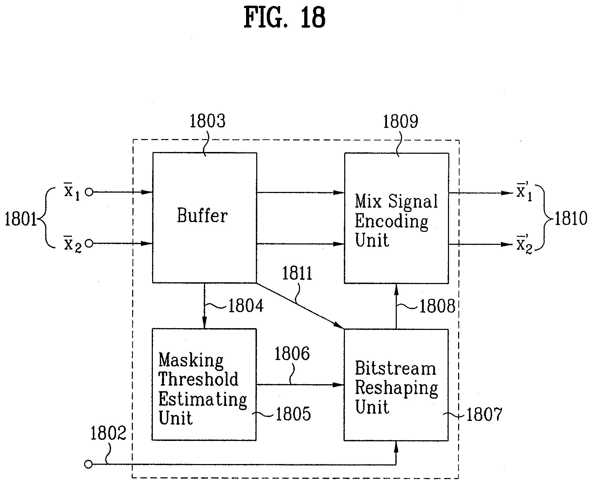

FIG. 18 is a detailed block diagram of an eighth signal processing apparatus for embedding side information by preserving an original signal.

Since the eighth signal processing apparatus is similar to the sixth signal processing apparatus shown in FIG. 13, details for the same parts are omitted in the following description. The eighth signal processing apparatus differs from the sixth signal processing apparatus in that an embedding unit constructing the encoding device is differently configured.

Referring to FIG. 18, a mix signal 1801 is inputted to a mix signal encoding unit 1809 via a buffer 1803.

A masking threshold estimating unit 1805 calculates a masking threshold using information 1804 on a characteristic of the mix signal 1801 and then finds a K value 1806 using the masking threshold.

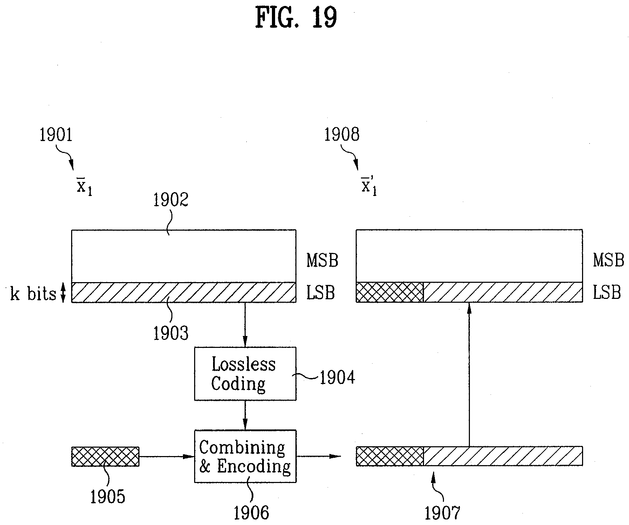

A bitstream reshaping unit 1807 per forms reshaping in a manner of combining mix signal data 1811 and a side information signal 1802 without removing the mix signal data 1811 of an area in which the side information signal 1802 will be embedded. The reshaping method will be explained in detail with reference to FIG. 19.

And, a mix signal encoding unit 1809 is able to embed a reshaped signal 1808 in the mix signal 1801.

FIG. 19 is a diagram for a method of embedding side information by preserving an original signal.

For convenience and clarity, description is made on the assumption that side information is inserted in a single block constructing a single channel 1901 of a mix signal.

Referring to FIG. 19, a component of the mix signal 1901 can be divided into an area 1902 where side information is not embedded and an area 1903 where side information is embedded.

The mix signal of the embedded area 1903 undergoes lossless coding 1904. Subsequently, the lossless-coded mix signal and a side information signal 1905 are combined and encoded to generate a combined signal 1907. Subsequently, the combined signal 1907 is embedded in the mix signal to generate a mix signal 1908 having the combined signal embedded therein.

Thus, if necessary, a decoding device can perfectly reconstruct the original mix signal 1901 using the combined signal 1907. This method is possible due to the following reason. First of all, since a data size of a side information signal to be embedded is actually smaller than an embeddable data size, it is able to secure a space for inserting a lossless-coded mix signal therein.

In a method of embedding a side information signal simply, distortion is not generated because an embedded signal is equal to an original signal perceptually but those signals are not completely identical to each other. So, in case that a perfect reconstruction of an original signal is necessary, the above method is usable.

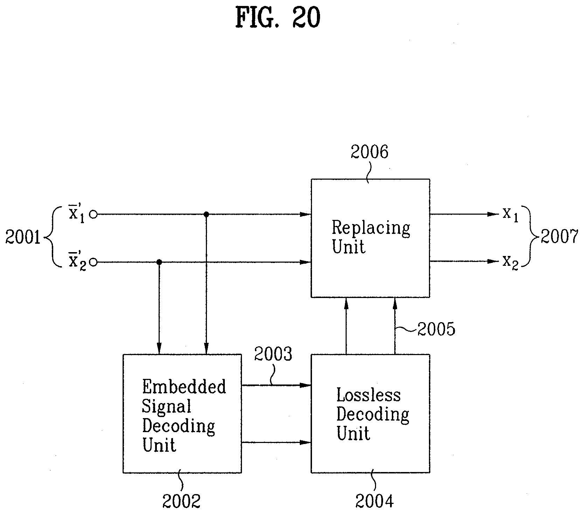

FIG. 20 is a block diagram of an eighth signal processing apparatus for reconstructing an original signal perfectly.

Referring to FIG. 20, the eighth signal processing apparatus includes an embedded signal decoding unit 2002, a lossless decoding unit 2004, and a replacing unit 2006.

The embedded signal decoding unit 2002 extracts a combined signal 2003 from a mix signal 2001 in which the combined signal is embedded.

The lossless decoding unit 2004 reconstructs a mix signal 2005 corresponding to an area, in which the combined signal is embedded, using the combined signal 2003.

And, the replacing unit 2006 generates an original signal 2007 using the reconstructed mix signal 2005.

The reconstructing process in accordance with FIG. 20 and a remixing process using side information can be simultaneously used. In this case, instead of performing decoding using $\overline{x_1}'$ and $\overline{x_2}'$, the remixing process is carried out using $\overline{x_1}$ and $\overline{x_2}$. Hence, a better output can be obtained.

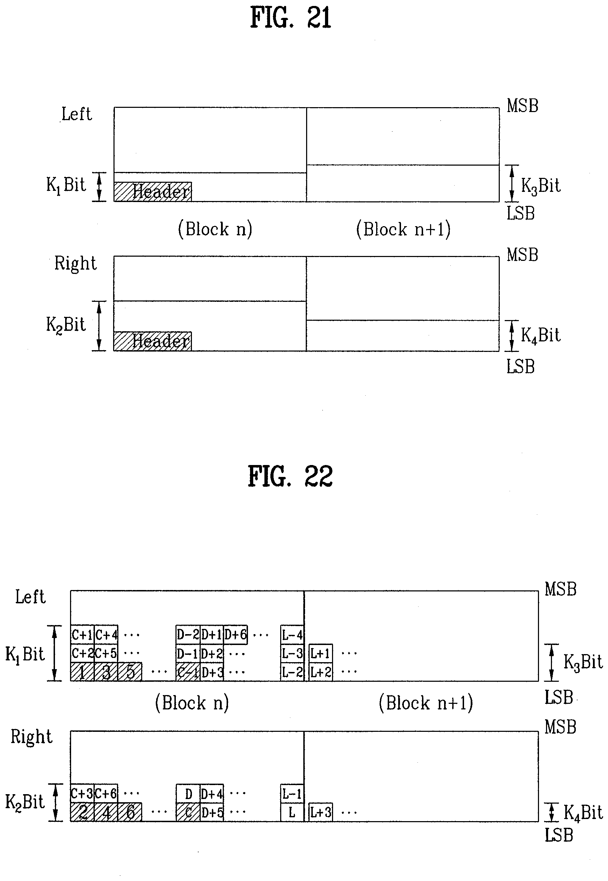

FIG. 21 is a diagram for a first method of embedding side information in an audio signal of two channels.

Referring to FIG. 21, the first method relates to a method of inserting side information in a mix signal having at least one channel in case that a frame of each channel is constructed with a plurality of blocks (length B).

A value of K can have different or equal value per a channel or per a block. Values of $K_1$, $K_2$, $K_3$ and $K_4$ can be stored in a frame header transported once for a whole frame. And, the frame header can be located at LSB. In this case, the header can be inserted by a bit plane unit and side information data can be inserted alternately by a sample unit or by a block unit.

FIG. 21 shows a case that a number of blocks within a frame is 2. So, a size (B) of the block becomes N/2. If so, a number of bits inserted in the frame becomes $(K_1 + K_2 + K_3 + K_4)*B$.

FIG. 22 is a diagram for a second method of embedding side information in an audio signal of two channels.

Referring to FIG. 22, the second method relates to a method of embedding side information by dividing the side information on two channels. In doing so, side information is inserted from LSB or MSB in order of bit plane into two channels and is also inserted alternately by a sample unit. So, both insertions are mixed.

The method can be carried out by a frame unit or by a block unit as shown in the drawing.

Referring to FIG. 22, portions 1 to C (shaded portions) indicate portions corresponding to a header. To facilitate a search of insertion frame sync word, they can be inserted in LSB or MSB in order of bit plane.

And, portions C+1, C+2 ... (non-shaded portions) indicate portions except the header. To facilitate side information data to be read out, they can be alternately inserted in two channels by a sample unit. K values may differ from each other per a channel or block or may be equal to each other.

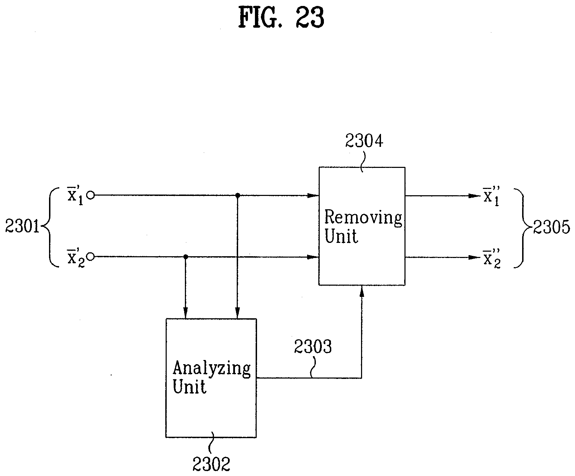

FIG. 23 is a block diagram of a ninth signal processing apparatus for removing embedded side information. Side information is modified or removed from a mix signal in which the side information is inserted for the purpose of copyright protection of contents and the like. Hence, side information for remix is not left at all.

Referring to FIG. 23, an analyzing unit 2302 analyzes a side information embedded mix signal 2301 and then extracts embedding information 2303 such as information of a side information embedded area and the like.

A removing unit 2304 removes side information from the side information embedded mix signal 2301 and generates a side information removed mix signal 2305. For this, various methods are usable as follows.

In a first method, it is checked by the analyzing unit 2302 whether embedded side information exits in a mix signal. A removal range is confirmed by finding an embedded level value and the like. Finally, a bit sequence having the side information embedded therein is correctly removed.

In a second method, a level value (similar to a value of K) of embeddable random noise is searched for without distorting a quality of sound. A corresponding random signal is then added to destroy inserted side information.

In a third method, a signal is modified using an all pass filter.

In a fourth method, LSB one bits are replaced by a random signal to remove sync word information.

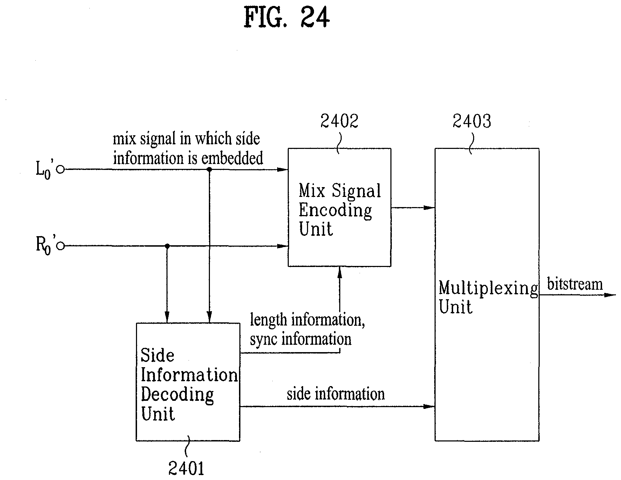

FIG. 24 is a block diagram of a tenth signal processing apparatus for generating a bitstream of a mix signal having side information embedded therein.

Referring to FIG. 24, the encoding device includes a side information extracting unit 2401, a mix signal encoding unit 2402, and a multiplexing unit 2403.

It may happen that a mix signal in which side information is embedded needs to be encoded (e.g., AAC (advanced audio coding) encoding needs to be carried out). In this case, if general AAC encoding is carried out, embedded information having very poor rigidity may totally disappear in the course of encoding. Yet, after side information has been extracted from a side information embedded mix signal prior to encoding, if compression encoding is carried out on the mix signal, it is able to transmit the side information together with the compressed mix signal. This method is explained in detail as follows.

First of all, the side information extracting unit 2401 extracts side information from the side information embedded mix signal. For this, the method explained in FIG. 1 is applicable for the side information extraction.

Subsequently, the mix signal encoding unit 2402 performs compression encoding on the mix signal from which the side information has been extracted.

And, the multiplexing unit 2403 generates a bitstream by multiplexing the encoded mix signal and the side information.

If the side information is spatial information, the multiplexed bitstream can be a compressed bitstream having spatial information. For instance, the multiplexed bitstream can include AAC+MPEG surround signal.

If the side information is a signal used by being temporally aligned with a PCM type mix signal, it is necessary to align a frame unit of a mix signal to be encoded with a unit for inserting the side information.

And, a process for matching an encoding start position of the mix signal using frame sync information obtained from the side information extracting process is required.

Moreover, it is able to determine a frame length of the mix signal using frame length information of embedded information. A method of using the frame length information will be explained later.

As a final bit sequence generated by the above-explained method has side information with a very low data rate, a multi-channel signal can be generated into a signal having a very low bit rate to be useful for storage and transmission.

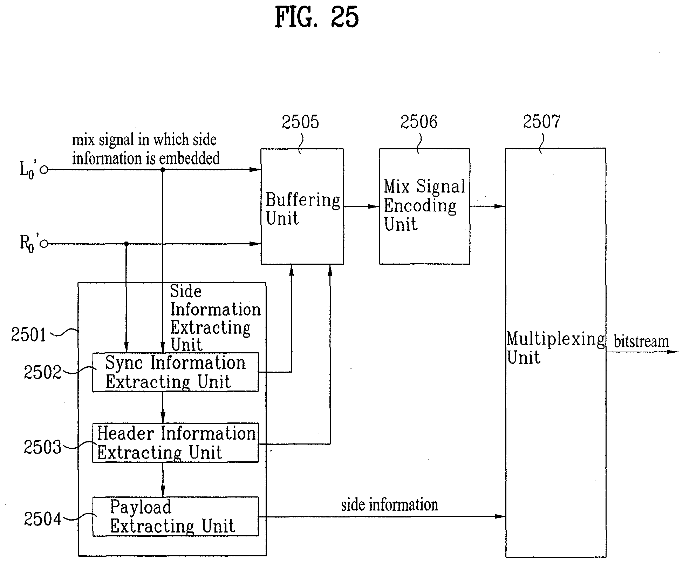

FIG. 25 is a detailed block diagram of the tenth signal processing apparatus shown in FIG. 24.

Referring to FIG. 25, the encoding device can further include a buffering unit 2505. And, a side information extracting unit 2501 constructing the encoding device includes a sync information extracting unit 2502, a header information extracting unit 2503, and a payload extracting unit 2504.

First of al, the sync information extracting unit 2502 extracts sync information of side information from a side information embedded mix signal Lo' and Ro'. Once the sync information is obtained, a position corresponding to a first sample of the corresponding sync information becomes a frame sync value. The frame sync value is delivered to the buffering unit 2505.

The buffering unit 2505 recognizes a start position of a frame using the frame sync value. The buffering unit 2505 buffers data amounting to a mix signal frame length from the corresponding position and then delivers the buffered data to a mix signal encoding unit 2506.

Meanwhile, the header information extracting unit 2503 extracts header information required for decoding in a manner of decoding a header area of side information existing after extraction of the sync information. The header information is usable in decoding payload information corresponding to data information included in the side information.

In this case, it is able to deliver frame length information of the side information extracted from the header area to the buffering unit 2505 or the mix signal encoding unit 2506.

The mix signal encoding unit 2506 is able to decide a frame length of the mix signal using the frame length information.

The payload extracting unit 2504 extracts actual data information except the sync information and the header information from the side information.

The mix signal encoding unit 2506 encodes the mix signal using the sync information and the frame length information.

Subsequently, the multiplexing unit 2507 generates a bitstream using the encoded mix signal and the side information.

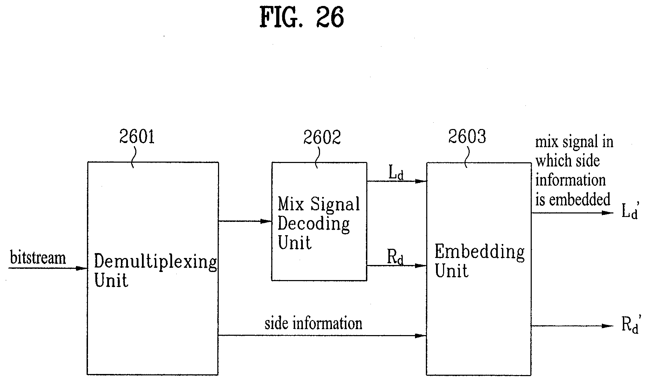

FIG. 26 is a block diagram of an eleventh signal processing apparatus for embedding side information in a mix signal.

Referring to FIG. 26, the eleventh signal processing apparatus includes a demultiplexing unit 2601, a mix signal decoding unit 2602, and an embedding unit 2603.

The demultiplexing unit 2601 extracts an encoded mix signal and side information to be embedded in the mix signal by demultiplexing a bitstream.

The mix signal decoding unit 2602 decodes the encoded mix signal and then outputs a decoded mix signal Ld and Rd.

And, the embedding unit 2603 generates a side information embedded mix signal Ld' and Rd' by embedding the side information in the decoded mix signal. The mix signal can be stored in a PCM signal storage medium such as a CD and the like and can be transmitted.

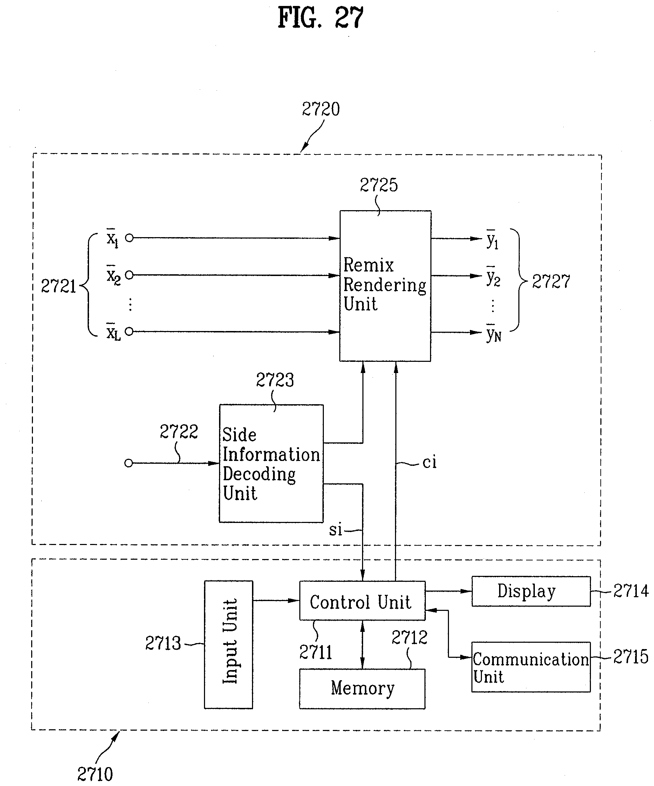

FIG. 27 is a block diagram of an eleventh signal processing apparatus for controlling a mix signal.

Referring to FIG. 27, an eleventh signal processing apparatus includes a mix signal control device 2710 and a mix signal processing device 2720.

The mix signal control device 2710 is interconnected to the mix signal processing device 2720 and includes a control unit 2711, a memory 2712, an input unit 2713, a display 2714, and a communication unit 2715.

In this case, the mix signal processing device 2720 may be identical to the third signal processing apparatus explained with reference to FIG. 5, of which details shall be omitted in the following description.

The memory 2712 is a storage device in which source control information per identification information of a mix signal is stored. In this case, the identification information of the mix signal can be side information (si) of the mix signal received from the side information decoding unit 2723 or the mix signal 2721 itself.

Meanwhile, the source control information can include at least one of a gain factor per source, a gain factor per channel, and a gain factor per source per subband. In this case, the gain factor can be identical to the former gain factor $(c_i, d_i)$ 608 explained with reference to FIG. 6.

If the gain factor $(c_i, d_i)$ varies in accordance with time, a time index "k' is attached thereto to represent $c_i(k)$ and $d_i(k)$ (k is a time index), Formula 10 can be modified into Formula 20.

[Formula 20]

$$y_1(k) = \sum_{i=1}^{M} c_i(k)s_i(k) + \sum_{i=M+1}^{I} a_i s_i(k)$$

$$y_2(k) = \sum_{i=1}^{M} d_i(k)s_i(k) + \sum_{i=M+1}^{I} b_i s_i(k)$$

Meanwhile, the source control information can include control information about panning effect in a specific section. For instance, a panning effect can be described in a manner that a human voice signal gradually moves from a right channel to a left channel in a section between 2 minutes 24 seconds and 2 minutes 42 seconds. In this case, start point information (e.g., $k_s$ = 2 minutes 24 seconds), end point information (e.g., $k_f$ = 2 minutes 42 seconds), a gain factor at a start point (e.g., $c_i(k_s)$ = 1, $d_i(k_s)$ = 0) and a gain factor at an end point (e.g., $c_i(k_f)$ = 0, $d_i(k_f)$ = 1) are included only. But, gain factors ($c_i(k)$, $d_i(k)$, where $k_s < k < k_f$) between the start and end points may not be included.

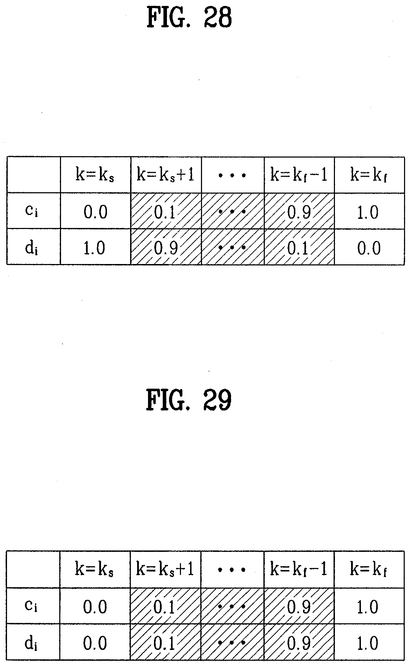

FIG. 28 is a diagram to explain start point information, end point information, and gain factors at the start and end points in case of a panning effect.

Referring to FIG. 28, gain factors ($c_i(k)$, $d_i(k)$) at k=$k_s$ (start point) and k=$k_f$ (end point) are shown. And, gain factors between the start and end points are shaded. If the gain factors at the start and end points are stored as source control information in the memory 2712, the gain factors (shaded portion) in-between can be generated by the control unit 2711.

The source control information can include control information on a fading effect in a specific section. For instance, a female voice signal gradually fades in or out in a section between 1 minute 24 seconds and 1 minute 42 second, which is called a fading effect. In this case, like the case of the panning effect, start point information (e.g., $k_s$ = 1 minutes 24 seconds), end point information (e.g., $k_f$ = 1 minutes 42 seconds), a gain factor at a start point (e.g., $c_i(k_s)$ = 0, $d_i(k_s)$ = 0) and a gain factor at an end point (e.g., $c_i(k_f)$ = 1, $d_i(k_f)$ = 1) are included only. But, gain factors ($c_i(k)$, $d_i(k)$, where $k_s < k < k_f$) between the start and end points may not be included.

FIG. 29 is a diagram to explain start point information, end point information, and gain factors at the start and end points in case of a fading effect.

Referring to FIG. 29, like the case shown in FIG. 28, gain factors (shaded portion) between start and end points can be generated by the control unit 2711 even if they are not stored in the memory 2712.

The control unit 2711 read-outs source control information (ci) matched to a mix signal from the memory 2712 based on identification information of a media signal and then outputs the read-out information to the mix signal processing device 2720.

Preferably, if there exists the control information (ci) matched to the mix signal, the control unit 2711 displays a list of the source control information.

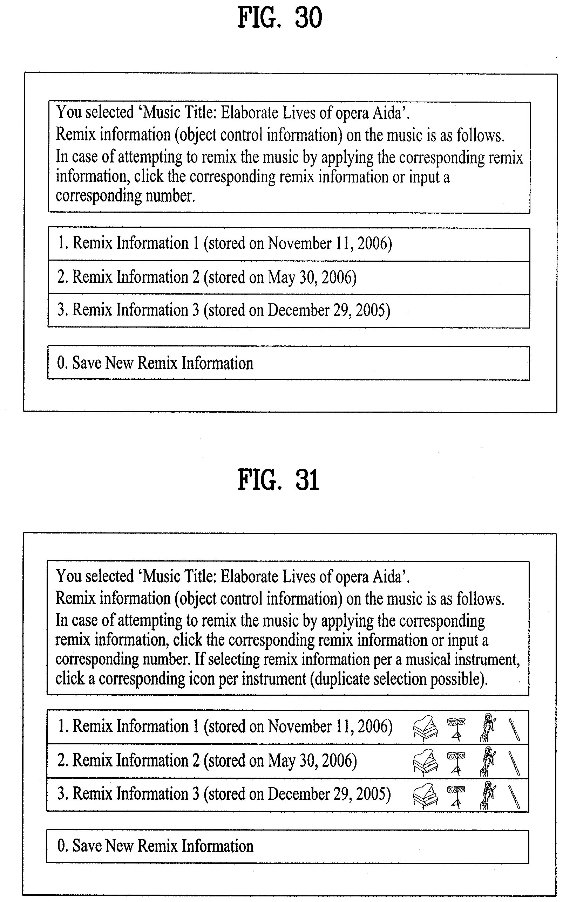

FIG. 30 and FIG. 31 are exemplary diagrams of screens pictures for representing lists of source control information. Fig. 31 shows a picture representing source information together with a list of source control information.

If a selection command for specific source control information is inputted by a user via the input unit 2713, selected control information (ci) is read from the memory 2712 and is then outputted to the mix signal processing device 2720.

In case that a selection command for one (e.g., female vocal) among sources (e.g., piano, violin, female vocal, flute) included in a single mix signal is inputted through the picture shown in FIG. 31, the control unit 2711 outputs source control information (e.g., ci = $[c_3(k), d_3(k)]$ corresponding to the selected source (e.g., female vocal) only. In case that modified source control information about the selected source control information selected is inputted via the input unit, the control unit 2711 stores the modified source control information in the memory 2712.

Meanwhile, in case that the source control information (ci) matched to the mix signal is not stored in the memory 2712, the control unit 2711 outputs a picture for enabling the source control information to be inputted via the display 2714. If the source control information is inputted via the input unit 2713, the control unit 2711 stores the inputted source control information in the memory 2712 by matching the inputted information to identification information of the mix signal.

The input unit 2713 is an input device for inputting source control information, source control information modifying command, source control information selecting command, and the like.

The display 2714 is a display device for displaying a source control information input picture, a source control information list, a source control information selection picture, and the like.

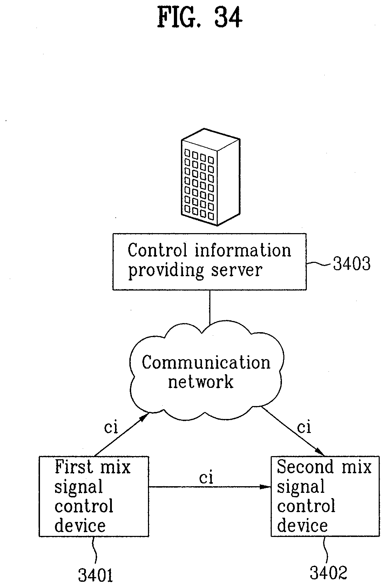

The communication unit 2715 is an element to transmit the source control information (ci) via a communication network to a second remix control device (not shown in the drawing) under the control of the control unit 2711. In this case, the source control information may include an encoded bit sequence including identification information of a mix signal to identify the mix signal. Besides, the second remix control device (not shown in the drawing) will be explained with reference to FIGs. 34 to 36 later.

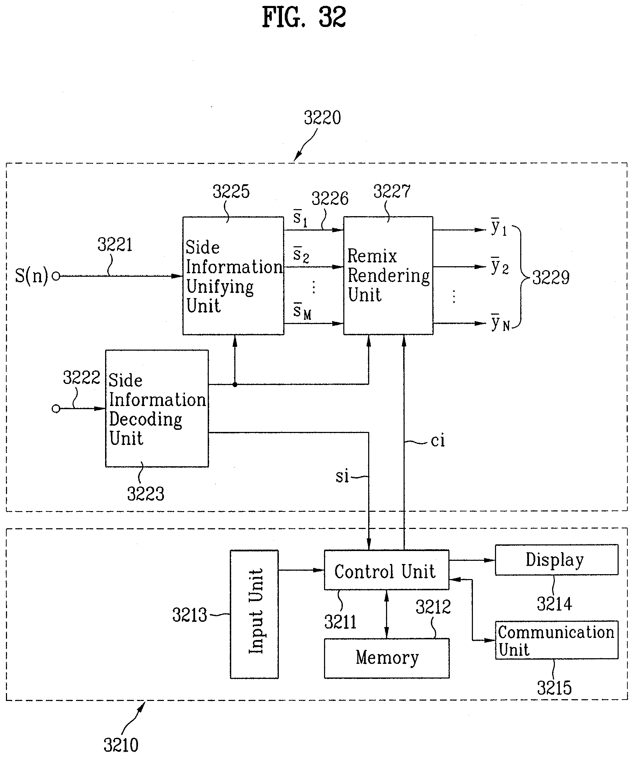

FIG. 32 is a block diagram of a twelfth signal processing apparatus for controlling a mix signal according to one embodiment of the present invention.

Referring to FIG. 32, a twelfth signal processing apparatus according to one embodiment of the present invention includes a mix signal control device 3210 and a mix signal processing device 3220.

The mix signal control device 3210 is interconnected to the mix signal processing device 3220 and includes a control unit 3211, a memory 3212, an input unit 3213, and a display 3214.

In this case, the mix signal processing device 3220 may be identical to the fourth signal processing apparatus explained with reference to FIG. 7, of which details shall be omitted in the following description.

Meanwhile, the control unit 3211, memory 3212, input unit 3213 and display 3214 of the control device 3210 included in the twelfth signal processing apparatus have almost same functions of the elements (having same names) of the control device 2710 included in the eleventh signal processing apparatus, of which details shall be omitted in the following description.

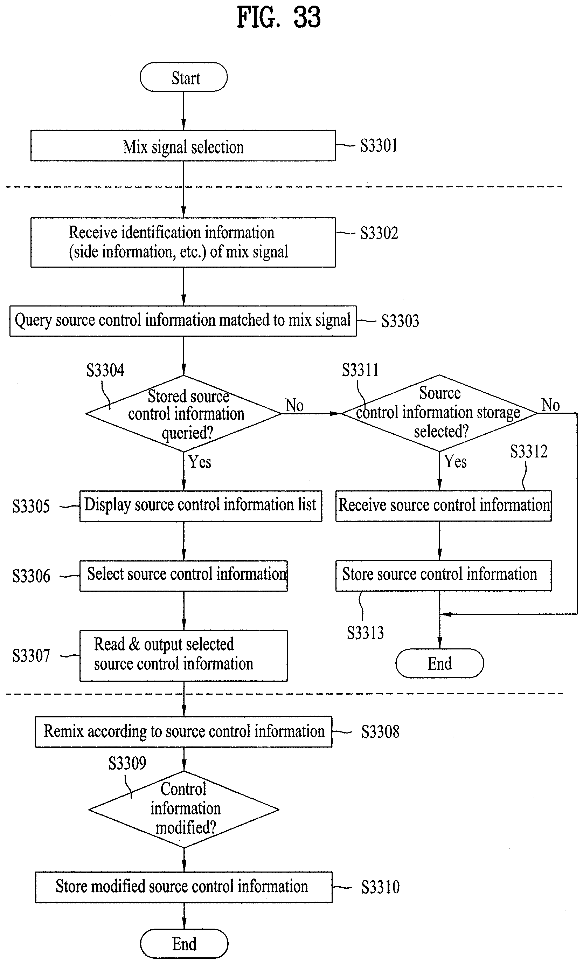

FIG. 33 is a flowchart for a method of processing a mix signal according to one embodiment of the present invention.

Referring to FIG. 33, first of all, a user selects a specific mix signal to remix from a plurality of mix signals (S3301).

If so, a mix signal processing device decodes side information of the mix signal.

A mix signal control device receives identification information (mix signal or side information of the mix signal) of the mix signal from the mix signal processing device or an external device (S3302).

Subsequently, based on the identification information of the mix signal received in the step S3302, the mix signal control device queries whether source control information matched to the mix signal selected in the step S3301 is stored or not (S3303).

If there exists the stored source control information ('yes' in the step S3304), a list of source control information is represented on a display (S3305). As mentioned in the foregoing description, examples of the source control information list are shown in FIG. 30 and FIG. 31.

The user inputs a selection command for specific source control information (all sources or in part) (S3305). For instance, while the picture shown in FIG. 30 is displayed, second remix information ('2. Remix information 2') is clicked. Alternatively, while the picture shown in FIG. 31 is displayed, an icon 'piano' of second remix information ('2. Remix information 2') is clicked.

If so, the mix signal processing device reads the source control information (all sources or in part) selected n the step S3305 and then outputs the read information to the mix signal processing device (S3306).

Having received the source control information outputted in the step S3306, the mix signal processing device remixes the mix signal in accordance with the source control information (S3308).

If the user modifies the source control information entirely or in part (S3309), the modified control information is stored (S3310).

Meanwhile, if the stored source control information does not exist ('no' in the step S3304), it is decided whether the user selects a storage of the source control information (S3311).

If the user selects the storage of the source control information ('yes' in the step S3311), the mix signal control device displays a source control information input picture. If the user inputs source control information, the mix signal control device receives the corresponding source control information (S3312).

Subsequently, the mix signal control device stores the received source control information by matching the received source control information to identification information of the mix signal (S3313).

FIG. 34 is a diagram of a process for generating to use source control information.

Referring to FIG. 34, a first mix signal control device 3401 provides source control information (ci) to a control information providing server 3403 via a communication network or directly transmits the source control information to a second mix signal control device 3402. In this case, the first mix signal control device 3401 can be equivalent to the former six signal control device 2710/3210 explained with reference to FIG. 27/32.

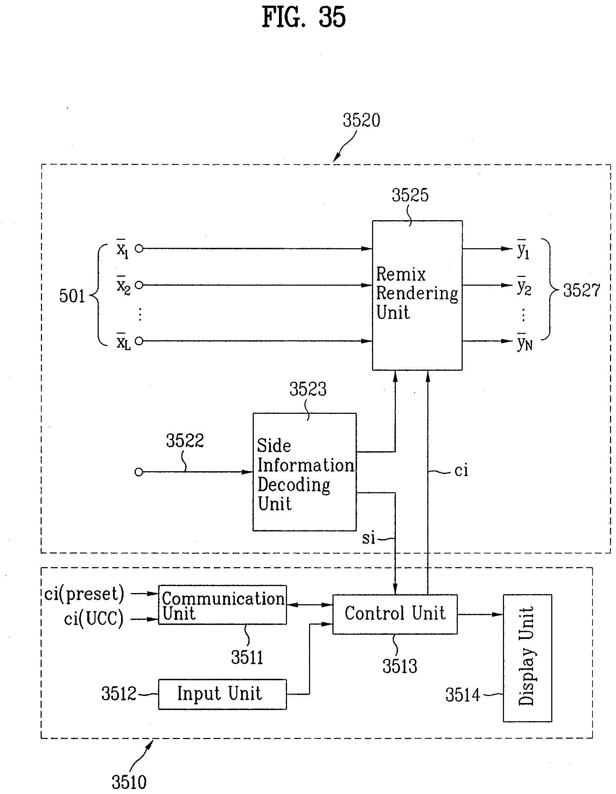

Meanwhile, the second mix signal control device 3402 having received the source control information (ci remixes a corresponding mix signal using the source control information (ci). Details of the second mix signal control device 3402 shall be explained with reference to FIG. 35 later.

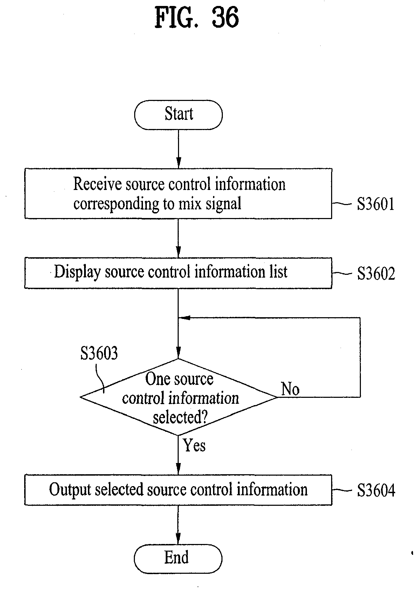

FIG. 35 is a block diagram of a thirteenth signal processing apparatus for controlling a mix signal, and FIG. 36 is a flowchart for a method of processing a mix signal.

Referring to FIG. 35, a thirteenth signal processing apparatus includes a second mix signal control device 3510 and a mix signal processing device 3520.

The second mix signal control device 3510 is interconnected to the mix signal processing device 3520 and includes a communication unit 3511, an input unit 3512, a control unit 3513, and a display 3514.

In this case, the mix signal processing device 3520 may be identical to the third signal processing apparatus explained with reference to FIG. 5, of which details shall be omitted in the following description.

The communication unit is an element for receiving at least one source control information (ci) corresponding to a mix signal. In this case, the at least one source control information (ci) may configure a bit sequence each and can be constructed with a single bit sequence. The source control information (ci) may include information (ci(preset)) generated by an encoding device or information (ci(UCC)) generated by a normal user.

The input unit 3512 is an input device for enabling one to be selected from at least one received source control informations (Ci).

The control unit 3513 controls the source control information (ci) selected via the input unit 3512 to be outputted to the mix signal processing device 3520.

And, the display is a device for displaying the at least one source control information.

Referring to FIG. 36, first of all, the second mix signal control device 3510 receives at least one source control information corresponding to a mix signal (S3601).

If so, a list of the source control information is displayed (S3602).

If a user selects one of the displayed source control informations ('yes' in the step S3603), the selected source control information is outputted to the mix signal processing device 3520 (S3604).

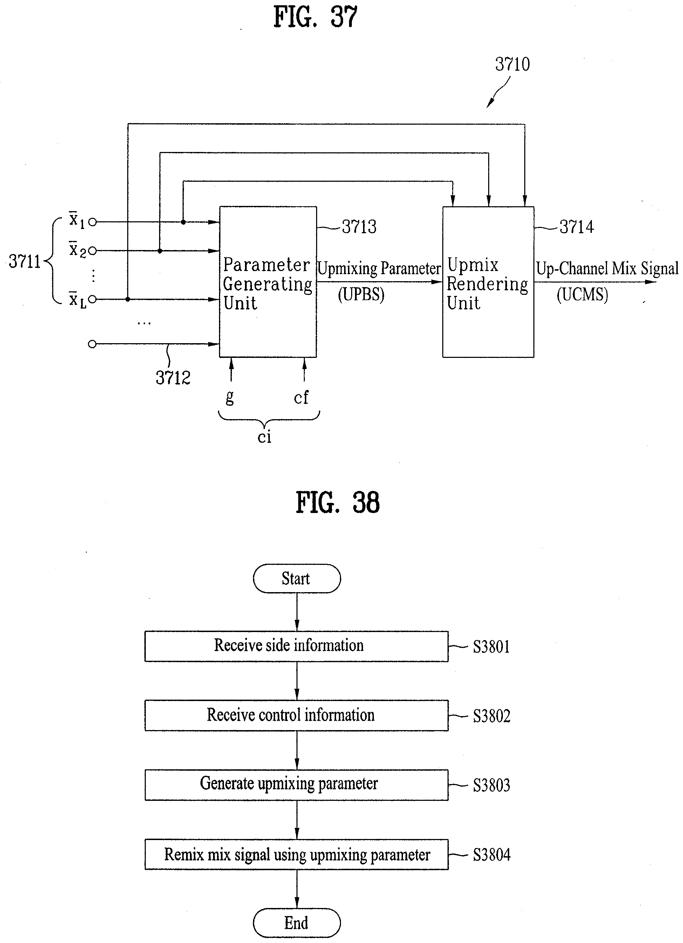

FIG. 37 is a block diagram of a fourteenth signal processing apparatus for controlling a mix signal.

Referring to FIG. 37, a mix signal control device 3710 includes a parameter generating unit 3713 and an upmix rendering unit 3714.

The parameter generating unit 3713 receives side information 3712 and control information (ci) and then generates an upmixing parameter (UPBS). Alternatively, by receiving a mix signal 3711 instead of side information 3712, the parameter generating unit 3713 is able to generate side information 3712 based on the received mix signal 3711.

Meanwhile, the control information (ci) has a conception of including at least one of a gain factor per source, a gain factor per channel, and a gain factor per source per subband (g) and output channel configuration information (cf). The gain factor at least one of a gain factor per source, a gain factor per channel, and a gain factor per source per subband (g) may be identical to the former gain factor ($c_i$ and $d_i$) 608 explained with reference to FIG. 6.

The upmixing parameter (upmix parameter bitstream, IPBS) generated by the parameter generating unit 3713 is a parameter corresponding to a case of attempting to perform rendering with a channel number greater than that of the mix signal 3711. And, the upmixing parameter can be constructed with a bit sequence encoded to be transferable to another device.

And, the upmix rendering unit 3714 receives the upmixing parameter (UPBS) and the mix signal 3711 and then outputs an up-channel mix signal (UCMS). In this case, the up-channel mix signal (UCMS) has a channel number greater than that of the mix signal 3711.

FIG. 38 is a flowchart for a method of processing a mix signal.

Referring to FIG. 38, first of all, side information corresponding to mix signal is received S3801).

Control information including at least one of a gain factor per source, a gain factor per channel, and a gain factor per source per subband and output channel configuration information is received (S3802).

An upmixing parameter is generated using the side information received in the step S3801 and the control information received in the step S3802.

Finally, a remixed upmix mix signal is generated using the upmixing parameter and the mix signal (S3804).

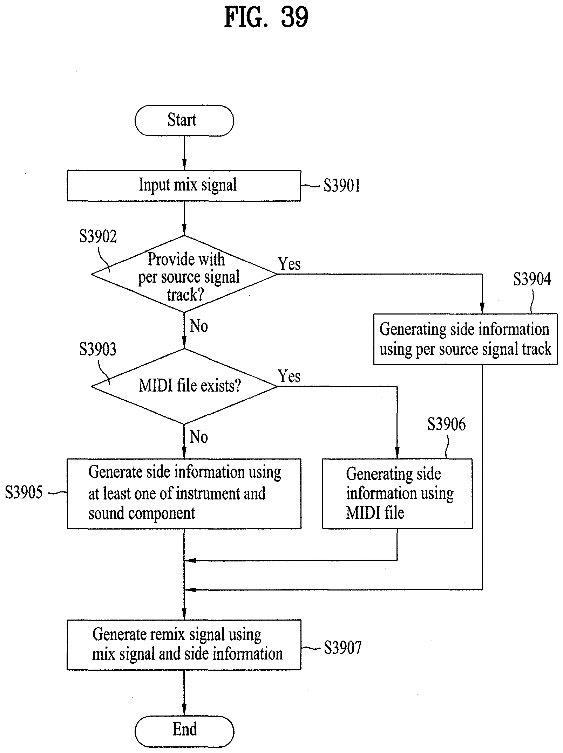

FIG. 39 is a flowchart for a method of generating side information.

In order for an encoding device to generate side information, a separate source signal is necessary. Yet, in various kinds of mix signals, it may happen that a source signal included in the mix signal does not exist separately. In this case, side information can be generated using a signal similar to the source signal included in the mix signal. And, the side information includes a parameter such as a gain value, a subband power, and the like.

Referring to FIG. 39, if a mix signal is inputted (S3901), it is decided whether a separate source signal of the mix signal exists independently (S3902).

If the separate source signal exists, side information is generated using the separate source signal (S3904).

If the separate source signal does not exist, it is decided whether a MIDI file for the mix signal exists or not (S3903).

If the MIDI file exists, side information can be generated using the MIDI file (S3906). For instance, a specific source signal (e.g., piano sound) is generated using the MIDI file and side information can be then generated using the specific source signal.

If the MIDI file does not exist, side information can be generated using one of the following methods.

In the first method, side information is generated using a musical instrument that uses a register band similar to that of a specific source signal (S3905). For instance, in case of vocal, side information can be generated using a musical instrument that uses a register band similar to that of the vocal.

In the second method, side information is generated using sound component indicating a specific space in a mix signal (S3905). For instance, in case of vocal, a sound component indicating a middle space in a mix signal is analyzed to be regarded as vocal. Side information is then generated using the sound component.

In the third method, the first and second methods are combined together. In particular, side information is generated using a musical instrument employing a register band similar to that of a specific source signal and sound component indicating a specific space in a mix signal (S3905).

Finally, a mix signal file can be generated using the mix signal and the side information (S3907).

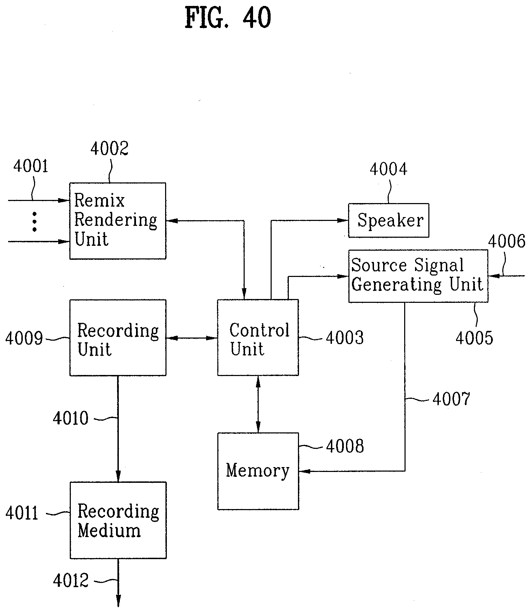

FIG. 40 is a block diagram of a fifteenth signal processing apparatus for replacing a specific source signal.

Referring to FIG. 40, a fifteenth signal processing apparatus includes a remix rendering unit 4002, a control unit 4003, a reproducing unit 4004, a source signal generating unit 4005, a memory 4008, a recording unit 4009, and a recording medium 4011. In FIG. 40, the reproducing unit 4004 includes a speaker.

First of all, a mix signal 4001 is inputted to the remix rendering unit 4002.

The remix rendering unit 4002 generates a remix signal using side information, the mix signal, and a user-mix parameter. In this case, the user-mix parameter is generated using control information obtained from a user. For instance, the remix signal can be generated in a manner of lowering a gain of a specific source signal (e.g., vocal signal) included in a mix signal or muting the specific source signal.

The control unit 4003 enables the remix signal to be outputted via the speaker 4004. In the course of outputting the remix signal, a new source 4006 may be inputted via the source signal generating unit 4005. In this case, the new source 4006 can be provided by a user or can be provided using a separate device.

Subsequently, the source signal generated by the source signal generating unit 4005 can be stored in the memory 4008.

The recording unit 4009 can generate a new remix signal 4010 using the remix signal and the new source signal stored in the memory 4008.

For instance, a remix signal is generated by muting a piano sound included in a mix signal. A piano signal generated by a user who plays a piano is inputted in the course of outputting the remix signal to generate a new remix signal. The piano signal generated by the user is stored in the memory and is then usable to generate a new remix signal by being synthesized with the remix signal.

The new mix signal 4010 is stored in the recording medium 4011 and is then externally outputted (4012). The recording medium 4011 is included in the signal processing apparatus or can exist independently.

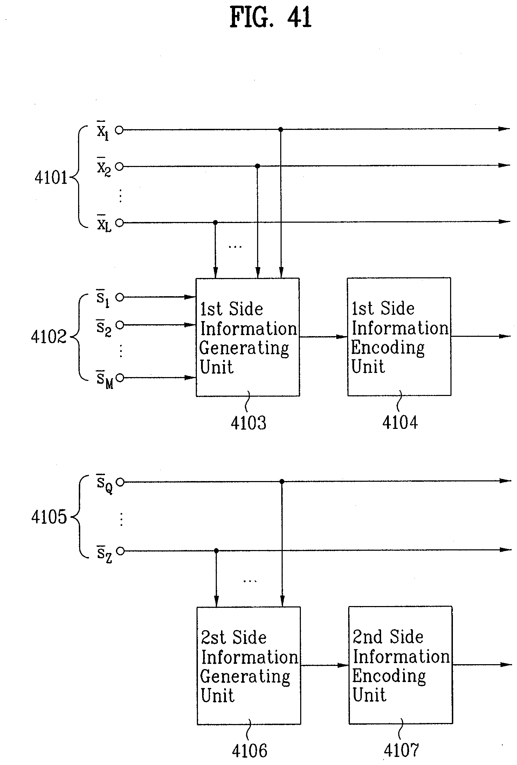

FIG. 41 is a block diagram of a sixteenth signal processing apparatus.

Referring to FIG. 41, a sixteenth signal processing apparatus includes a first side information generating unit 4103, a first side information encoding unit 4104, a second side information generating unit 4106, and a second side information encoding unit 4107.

An encoding device sends a mix signal 4101 to a decoding device. The encoding device is able to directly send the mix signal 4101 to the decoding device. Alternatively, in case that there are a plurality of mix signals 4101, the encoding device is able to send then in a manner of downmixing the mix signals 4101 into one or twp downmix signals. Optionally, the downmix signal 4101 can be transmitted by being quantized and encoded for mix signal transmission efficiency.

Source signals can be divided into signals $(\overline{s_1}...\overline{s_M})$ 4102 included in the mix signal 4101 and other source signals $(\overline{s_Q}...\overline{s_Z})$ 4105 not included in the mix signal 4101.

For instance, it is assumed that the source signals 4102 included in the mix signal 4102 are drum and base signals and it is also assumed that the source signals 4105 not included in the mix signal 4101 are vocal-1, vocal-2, vocal-3, piano and violin signals. In this case, the first side information generating unit 4103 generates first side information for adjusting drum and base signals using the mix signal 4101 and the drum and base signals 4102 included in the mix signal 4101. In the following description, the side information for the source signals 4102 included in the mix signal 4101 is named the first side information. And, side information for the source signals 4105 not included in the mix signal 4101 is named second side information.

The second side information generating unit 4106 generates second side information using the vocal-1, vocal-2, vocal-3, piano and violin signals. The second side information is the information to adjust the source signals 4105 not included in the mix signal 4101 per a source signal. Each of the first and second side informations includes a gain factor, a power per subband, a delay constant, and the like.

The first side information encoding unit 4104 encodes the first side information generated by the first side information generating unit 4103 and then transmits the encoded signal to the decoding device.

The second side information encoding unit 4107 encodes the second side information generated by the second side information generating unit 4106 and then transmits the encoded signal to the decoding device.

The source signals 4105 not included in the mix signal 4101 and the corresponding second side information can be generated not only by the encoding device but also by other devices.

In particular, the source signals 4105 not included in the mix signal 4101 and the corresponding second side information are generated by a source signal providing server separate from the encoding device and are then provided to the decoding device.

Alternatively, the source signals 4105 not included in the mix signal 4101 and the corresponding second side information can be directly generated by a user.

The decoding device is able to generate a new mix signal using the source signals 4102 included in the mix signal 4101 and the source signals 4105 not included in the mix signal 4101.

In the former example, a user just selects the base signal from the source signals 4102 included in the mix signal 4101 to taste and also selects the vocal- 1 and piano sounds only from the source signals 4105 not included in the mix signal 4101 and then generates a new mix signal including the base signal, the vocal-1 sound and the piano sound.

The user is able to receive each of the source signals 4105 not included in the mix signal 4101 from the source signal providing service and/or the decoding device respectively. So, the user is able to generate a new mix signal using the respectively received source signals 4105.

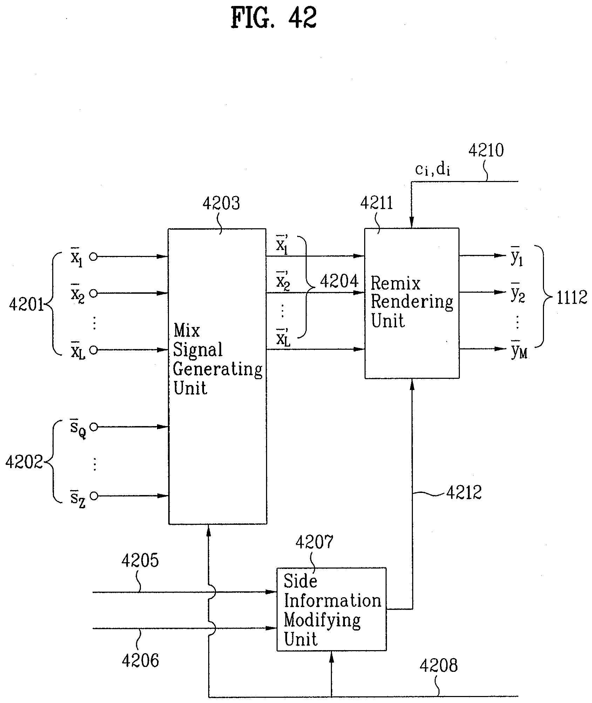

FIG. 42 is a block diagram of a seventeenth signal processing apparatus.

Referring to FIG. 42, a seventeenth signal processing apparatus includes a mix signal modifying unit 4203, a side information modifying unit 4207, and a remixing unit 4211.

The seventeenth signal processing apparatus extracts a mix signal 4201, which is received from an encoding device or stored in advance, and a source signal 4202 not included in the mix signal 4201.

The mix signal modifying unit 4203 modifies the mix signal 4201 using the mix signal 4201 and the source signal 4202 not included in the mix signal 4201.

In particular, the mix signal modifying unit 4203 receives source signal selection information 4208 from a user and then generates a new mix signal 4204 including a source signal selected by the user from the source signal included in the mix signal 4201 and he source signal 4202 not included in the mix signal 4201.

The side information modifying unit 4207 receives the source signal selection information 4208 from the user and then generates side information 4209 for adjusting the new mix signal 4204 per a source signal. In the following description, the side information for the new mix signal 4204 is called third side information 4209.

The side information modifying unit 4207 is able to generate the third side information 4209 for the new mix signal 4204 using first side information for adjusting the mix signal 4201 per a source signal and second side information for adjusting the source signal 4202 not included in the mix signal 4201.

And, the side information modifying unit 4207 is able to directly generate the third side information 4209 using the mix signal 4201 and the source signal 4202 not included in the mix signal 4201.

The remixing unit 4211 receives control information 4210 from the user, receives the modified mix signal 4204 from the mix signal modifying unit 4203, and receives the third side information for the new mix signal 4204 from the side information modifying unit 4207.

The remixing unit 4211 generates a remixed mix signal 4212 using the control information 4210, the modified mix signal 4204, and the third side information 4209 for the modified mix signal 4204.

The seventeenth signal processing apparatus can include an icon processing unit (not shown in the drawing) for extracting an icon representing a source signal, modifying the extracted icon, and generating a new icon.

The user is able to use an icon symbolizing each source signal in adjusting the corresponding source signal included in a mix signal. An icon can include an image for representing a musical instrument of a source signal, a face figure of a singer, and the like or a text for describing a musical instrument name and the like.

The user is able to adjust a source signal using an icon for the source signal transmitted by the encoding device.

The user modifies an icon for a source signal transmitted by the encoding device to taste and then uses the modified icon. The user receives an icon for a source signal by accessing a server for providing the source signal and then uses the received icon. And, the user directly generates an icon for a source signal and then uses the generated icon interconnected to the source signal.

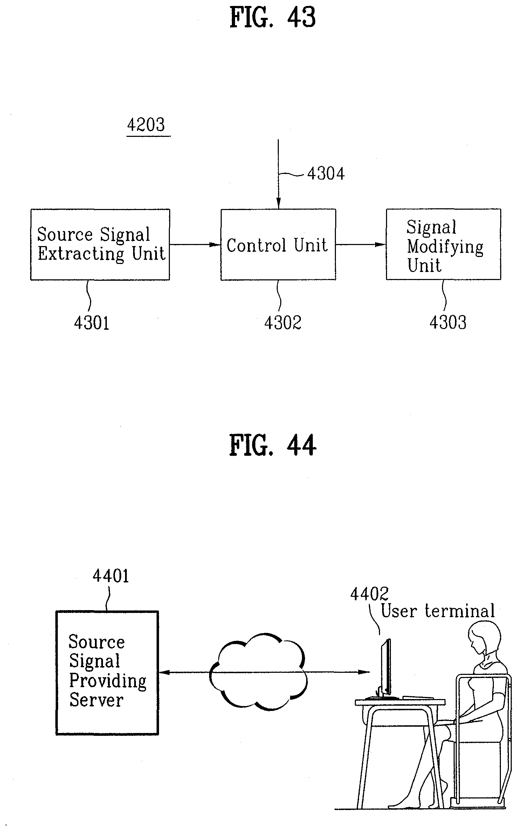

FIG. 43 is an internal block diagram of a mix signal transforming unit.

Referring to FIG. 43, a mix signal modifying unit 4203 includes a source signal extracting unit 4301, a control unit 4302, and a signal modifying unit 4303.

First of all, the source signal extracting unit 4301 extracts a source signal. In this case, the source signal includes a source signal included in a mix signal and a source signal not included in the mix signal.

The control unit 4302 receives source signal selection information 4304 from a user. The control unit 4302 extracts a source signal selected by the user and then sends the extracted source signal to the signal modifying unit 4303.

The signal modifying unit 4303 generates a new mix signal using the source signal selected by the user. In particular, the signal modifying unit 4303 generates a new mix signal including the source signal selected by the user in a manner of excluding a specific source signal included in the mix signal from a new mix signal and enabling a specific source signal among source signals not included in the mix signal to be included in the new mix signal, in accordance with a selection made by the user.

Hence, the user is able to modify an original mix signal into a new mix signal by selecting a specific source signal to taste.

FIG. 44 is a diagram for a method of processing a signal using a source signal providing server.

Referring to FIG. 44, a user accesses a source signal providing server 4401 using a user terminal 4402. In this case, the user terminal 4402 includes such a device capable of accessing a server via a communication network as a user PC, a mobile phone, a PDA, a PMP, etc.

The source signal providing server 4401 includes a source signal, which is not included in a mix signal, reproducible together with the mix signal.

The source signal providing server 4401 includes a source signal, which has the same beat, tempo and the like as a mix signal and is synchronized with the mix signal, to be played with the mix signal.

For instance, when the song 'November Rain' is played by drum, base, guitar and piano, each source signal is played with the same tempo and beat for the same music. In this case, if drum and base signals among source signals are just included in a mix signal, a user is able to download a guitar or piano signal for the 'November Rain' from an accessed source signal providing server.

The user is able to play the downloaded guitar or piano signal together with an original mix signal.

The user accesses the source signal providing server 4401 and then selects a specific music.

The source signal providing server 4401 displays a currently included source signal list for the specific music selected by the user.

The user selects a specific source from source signals displayed by the source signal providing server 4401.

The source signal providing server 4401 extracts the user-selected source signal and then transmits the extracted source signal to the user terminal 4402. Optionally, the source signal providing server 4401 generates side information for the user-selected source signal and then transmits the side information to the user terminal 4402 together with the source signal.

The user is able to generate a new mix signal from the source signal received from the source signal providing server 4401 and the source signal included in the original mix signal using a decoding device.

The user may receive a source signal from the source signal providing server 4401 and is also able to generate a source signal for a specific music in direct. The user is able to generate a new mix signal by modifying an original mix signal using a source signal included in a mix signal and a directly generated source signal.

The source signal providing server 4401 can include an icon for a source signal as well as the source signal. The user accesses the source signal providing server 4401 and then download to use the icon for the source signal. The user modifies an icon for a source signal received from the source signal providing server 4401 and then used the modified icon.

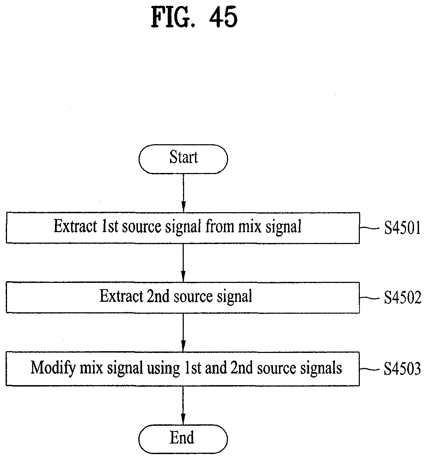

FIG. 45 is a flowchart for a method of transforming a mix signal.

Referring to FIG. 45, a signal processing apparatus extracts a mix signal received from an encoding device o previously stored. The signal processing apparatus extracts a source signal included in the mix signal (S4501).

In the following description, a source signal included in the mix signal is named a first source signal and a source signal not included in the mix signal is named a second source signal.

The signal processing apparatus extracts the second source signal which is received from the encoding device or a source signal providing server 4401 or directly generated by a user (S4502).

The signal processing apparatus modifies the mix signal using the first and second source signals (S4503). In particular, the signal processing apparatus generates a new mix signal including a source signal selected by the user from the first source signal and the second source signal only.

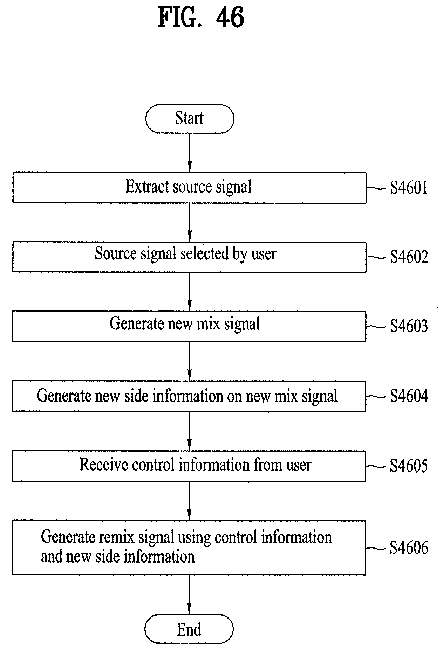

FIG. 46 is a flowchart for a method of transforming a mix signal.

Referring to FIG. 46, a signal processing apparatus extracts a source signal (S4601). In this case, the source signal includes a first source signal included in a mix signal and a second source signal not included in the mix signal.

The signal processing apparatus receives a source signal selected by a user (S4602).

The signal processing apparatus generates a new mix signal using the source signal selected by the user (S4603).

In particular, the signal processing apparatus generates a new mix signal in a manner of removing a source signal not specified by a user from source signals included in an original mix signal and adding a source signal specified by the user among source signals not included in the mix signal to the mix signal.

The signal processing apparatus generates third side information for the new mix signal to adjust the new mix signal per a source signal.

A signal processing apparatus is able to generate third side information for a new mix signal using first side information for a mix signal and second side information for a source signal not included in the mix signal.

And, the signal processing apparatus is able to generate third side information without using first and second side informations.

In particular, having generated a new mix signal, the signal processing apparatus is able to directly generate third side information for the new mix signal using the generated mix signal.

The signal processing apparatus receives control information from the user (S4605).

And, the signal processing apparatus generates a remixed mix signal capable of controlling the new mix signal per a source signal using control information received from the user and the third side information (S4606).

**Claims**

1. A signal processing method comprising:

    obtaining an identification information identifying a mix signal containing at least one source signal, from a side information of the mix signal (S3302);
    obtaining, from a memory, at least one source control information of the identified mix signal based on the identification information (S3303);
    displaying a list of the at least one source control information on a display (S3305);
    selecting one of the at least one source control information from the list by a selection command (S3306); and
    generating a remix signal by applying the selected source control information to the identified mix signal (S3308), wherein the source control information corresponds to information for controlling at least one source signal.

2. A signal processing apparatus, comprising:

    a display (3214);
    a memory (3212) storing at least one source control information per a mix signal; and
    a control unit (3211) configured to:

        obtain an identification information identifying a mix signal containing at least one source signal from a side information of the mix signal,
        obtain, from the memory, the at least one source control information of the identified mix signal based on the identification information,
        display a list of the at least one source control information on the display;
        select one of the at least one source control information from the list by a selection command, and
        generate a remix signal by applying the selected source control information to the identified mix signal,
        wherein the selected source control information corresponds to information for controlling at least one source signal.

**Patentansprüche**

1. Signalverarbeitungsverfahren, umfassend:

    Erhalten (S3302) einer Identifizierungsinformation, welche ein Mischsignal, beinhaltend zumindest ein Quellsignal, identifiziert, aus einer Nebeninformation des Mischsignals;

Erhalten (S3303), aus einem Speicher, zumindest einer Quellensteuerungsinformation des identifizierten Mischsignals basierend auf der Identifizierungsinformation;

Darstellen (S3305) einer Liste der zumindest einen Quellensteuerungsinformation auf einem Bildschirm;

Auswählen (S3306) einer aus der zumindest einen Quellensteuerungsinformation aus der Liste mittels eines Auswahlbefehls; und

Erzeugen (S3308) eines Remix-Signals durch Anwenden der ausgewählten Quellensteuerungsinformation auf das identifizierte Mischsignal,

wobei die Quellensteuerungsinformation einer Information zur Steuerung zumindest eines Quellsignals entspricht.

2. Signalverarbeitungsvorrichtung, umfassend:

einen Bildschirm (3214);

einen Speicher (3212), welcher zumindest eine Quellensteuerungsinformation je einem Mischsignal speichert; und

eine Steuereinheit (3211), welche dazu eingerichtet ist, um:

eine Identifizierungsinformation, welche ein Mischsignal, beinhaltend zumindest ein Quellsignal, identifiziert, aus einer Nebeninformation des Mischsignals zu erhalten,

aus dem Speicher die zumindest eine Quellensteuerungsinformation des identifizierten Mischsignals basierend auf der Identifizierungsinformation zu erhalten,

eine Liste der zumindest einen Quellensteuerungsinformation auf dem Bildschirm darzustellen;

eine aus der zumindest einen Quellensteuerungsinformation mittels eines Auswahlbefehls aus der Liste auszuwählen, und

ein Remix-Signal durch Anwenden der ausgewählten Quellensteuerungsinformation auf das identifizierte Mischsignal zu erzeugen,

wobei die ausgewählte Quellensteuerungsinformation einer Information zur Steuerung zumindest eines Quellsignals entspricht.

**Revendications**

1. Procédé de traitement de signal consistant à :

obtenir une information d'identification identifiant un signal mélangé contenant au moins un signal source, provenant d'une information supplémentaire du signal mélangé (S3302) ;

obtenir, en provenance d'une mémoire, au moins une information de commande de source du signal mélangé sur la base de l'information d'identification (S3303) ;

afficher une liste de ladite information de commande de source sur un écran (S3305) ;

sélectionner ladite information de commande de source dans la liste par une commande de sélection (S3306) ; et

produire un signal remélangé par application de l'information de commande de source au signal mélangé identifié (SS3308),

l'information de commande de source correspondant à l'information destinée à commander au moins un signal source.

2. Appareil de traitement de signal, comprenant :

un écran (3214) ;

une mémoire (3212) mémorisant au moins une information de commande de source par signal mélangé ; et

une unité de commande (3211) conçue pour :

obtenir une information d'identification identifiant un signal mélangé contenant au moins un signal source provenant d'une information supplémentaire du signal mélangé,

obtenir, en provenance de la mémoire, ladite information de commande de source du signal mélangé identifié en fonction de l'information d'identification,

afficher une liste de ladite information de commande de source sur l'écran ;

sélectionner ladite information de commande de source dans la liste par une commande de sélection, et

produire un signal remélangé par application de l'information de commande de source sélectionnée au signal mélangé identifié,

l'information de commande de source sélectionnée correspondant à l'information destinée à commander au moins un signal source.

# FIG. 1

# FIG. 2

# FIG. 3

# FIG. 4

$\bar{s}_1$ o

$\bar{s}_2$ o

401 {

⋮

$\bar{s}_M$ o

404

Downmixing
Unit → S(n)

402

Side
Information 405 Side
Generating Information 407
Unit Encoding
Unit

⋮

403 406

# FIG. 5

# FIG. 6

# FIG. 7

# FIG. 8

# FIG. 9

# FIG. 10

# FIG. 11

# FIG. 12

# FIG. 13

# FIG. 14

# FIG. 15

EP 2 084 703 B1

1501

0 1 0 1 0 0 1 0 1 0 0 1 1 1 0 1 0 0 1 0 0 · · ·

1503

k bits

1502

| Sample : 0 | 1 | | N−1 | N |
|---|---|---|---|---|
| 0(1) | 0(5) | | 0 | 0 |
| 1(2) | 0(6) | · · · | 1 | 0 |
| 0(3) | 1(7) | | 0 | 0 |
| 1(4) | 0(8) | | 0 | 0 |

(1),(2) :
Data arrangement
order

1506

1504

Block (N samples)

1505

# FIG. 16

| Sync Word | K | Other Information | Error Correction Code-1 | Side Information Data | Error Correction Code-2 |
|-----------|---|-------------------|-------------------------|----------------------|-------------------------|

header(1601) — frame data(1602)

# FIG. 17

# FIG. 18

# FIG. 19

1901

$\bar{x}_1$

1902

k bits

MSB

LSB

1903

Lossless
Coding ~1904

Combining
& Encoding

1905

1906

1908

$\bar{x}'_1$

MSB

LSB

1907

# FIG. 20

# FIG. 21

# FIG. 22

# FIG. 23

# FIG. 24

mix signal in which side
information is embedded

$L_0'$ o

$R_0'$ o

2402

Mix Signal
Encoding
Unit

2403

Multiplexing
Unit

bitstream

length information,
sync information

Side
Information
Decoding
Unit

side information

2401

# FIG. 25

2505   2506   2507

mix signal in which side
information is embedded

$L_0'$ o

$R_0'$ o

**Buffering Unit**

**Mix Signal Encoding Unit**

Side Information Extracting Unit

2501

2502 — **Sync Information Extracting Unit**

2503 — **Header Information Extracting Unit**

2504 — **Payload Extracting Unit**

side information

**Multiplexing Unit** bitstream

## FIG. 26

# FIG. 27

# FIG. 28

|        | $k=k_s$ | $k=k_s+1$ | $\cdots$ | $k=k_f-1$ | $k=k_f$ |
|--------|---------|-----------|----------|-----------|---------|
| $c_i$  | 0.0     | 0.1       | $\cdots$ | 0.9       | 1.0     |
| $d_i$  | 1.0     | 0.9       | $\cdots$ | 0.1       | 0.0     |

# FIG. 29

|        | $k=k_s$ | $k=k_s+1$ | $\cdots$ | $k=k_f-1$ | $k=k_f$ |
|--------|---------|-----------|----------|-----------|---------|
| $c_i$  | 0.0     | 0.1       | $\cdots$ | 0.9       | 1.0     |
| $d_i$  | 0.0     | 0.1       | $\cdots$ | 0.9       | 1.0     |

## FIG. 30

You selected 'Music Title: Elaborate Lives of opera Aida'.
Remix information (object control information) on the music is as follows.
In case of attempting to remix the music by applying the corresponding remix information, click the corresponding remix information or input a corresponding number.

1. Remix Information 1 (stored on November 11, 2006)

2. Remix Information 2 (stored on May 30, 2006)

3. Remix Information 3 (stored on December 29, 2005)

0. Save New Remix Information

## FIG. 31

You selected 'Music Title: Elaborate Lives of opera Aida'.
Remix information (object control information) on the music is as follows.
In case of attempting to remix the music by applying the corresponding remix information, click the corresponding remix information or input a corresponding number. If selecting remix information per a musical instrument, click a corresponding icon per instrument (duplicate selection possible).

1. Remix Information 1 (stored on November 11, 2006)

2. Remix Information 2 (stored on May 30, 2006)

3. Remix Information 3 (stored on December 29, 2005)

0. Save New Remix Information

# FIG. 32

3220

3225  3226  3227

3221

$S(n) \circ$ → Side Information Unifying Unit → $\bar{s}_1$ $\bar{s}_2$ $\vdots$ $\bar{s}_M$ → Remix Rendering Unit → $\bar{y}_1$ $\bar{y}_2$ $\vdots$ $\bar{y}_N$ ⎬ 3229

3222 Side Information Decoding Unit

3223

si

ci

Input Unit → Control Unit → Display

3213

3211  3212

Memory

3214

Communication Unit

3215

3210

# FIG. 33

Start

Mix signal selection — S3301

Receive identification information
(side information, etc.) of mix signal — S3302

Query source control information matched to mix signal — S3303

S3304 — Stored source control information queried?

No → S3311 — Source control information storage selected? — No →

Yes ↓

S3305 — Display source control information list

Receive source control information — S3312

S3306 — Select source control information

Store source control information

S3313

S3307 — Read & output selected source control information

End

Remix according to source control information — S3308

S3309 — Control information modified?

Store modified source control information — S3310

End

# FIG. 34

# FIG. 35

# FIG. 36

```
        ┌─────────┐
        │  Start  │
        └─────────┘
             │
             ▼
┌───────────────────────────────────┐
│  Receive source control information│─── S3601
│  corresponding to mix signal       │
└───────────────────────────────────┘
             │
             ▼
┌───────────────────────────────────┐
│  Display source control information list │─── S3602
└───────────────────────────────────┘
             │
             ▼
S3603      ◇
        ╱ One source ╲      No
      ◇ control information ◇────────┐
        ╲  selected?  ╱              │
             ◇                       │
            Yes                      │
             ▼                       │
┌───────────────────────────────────┐
│ Output selected source control information │─── S3604
└───────────────────────────────────┘
             │
             ▼
        ┌─────────┐
        │   End   │
        └─────────┘
```

# FIG. 37

3710

$\bar{x}_1$
$\bar{x}_2$
$\vdots$
$\bar{x}_L$

3711

3712

Parameter Generating Unit — 3713

Upmixing Parameter (UPBS)

Upmix Rendering Unit — 3714

Up-Channel Mix Signal (UCMS)

g    cf

ci

# FIG. 38

Start

Receive side information — S3801

Receive control information — S3802

Generate upmixing parameter — S3803

Remix mix signal using upmixing parameter — S3804

End

# FIG. 39

```
                    ┌──────────┐
                    │  Start   │
                    └──────────┘
                         │
                         ▼
         ┌───────────────────────────────┐
         │       Input mix signal        │── S3901
         └───────────────────────────────┘
                         │
 S3902                   ▼
    ┌        ╱───────────────────╲        Yes
    └─────→ ╱    Provide with     ╲─────────────────────────┐
            ╲  per source signal  ╱                         │
             ╲      track?       ╱                          │      S3904
              ╲─────────────────╱                           ▼
                      │ No              ┌──────────────────────────────┐
 S3903                ▼                 │  Generating side information │
    ┌        ╱───────────────╲   Yes    │  using per source signal track│
    └─────→ ╱                 ╲─────┐    └──────────────────────────────┘
            ╲  MIDI file exists?   ╱     │                      │
             ╲                   ╱       │                      │
              ╲─────────────────╱        │   S3906              │
                      │ No               ▼                      │
                      │          ┌──────────────────┐           │
         ┌────────────────────┐  │  Generating side │           │
 S3905 ──│ Generate side info-│  │  information using│          │
         │ rmation using at   │  │  MIDI file       │           │
         │ least one of       │  └──────────────────┘           │
         │ instrument and     │         │                       │
         │ sound component    │         │                       │
         └────────────────────┘         │                       │
                      │                 │                       │
                      ◄─────────────────┘                       │
                      │                                         │
                      ◄─────────────────────────────────────────┘
                      ▼
         ┌────────────────────────┐
         │ Generate remix signal  │── S3907
         │ using mix signal and   │
         │ side information       │
         └────────────────────────┘
                      │
                      ▼
                ┌──────────┐
                │   End    │
                └──────────┘
```

# FIG. 40

# FIG. 41

# FIG. 42

# FIG. 43

4203

—4304

| Source Signal Extracting Unit | → | Control Unit | → | Signal Modifying Unit |

4301                    4302                    4303

# FIG. 44

4401

Source Signal Providing Server

4402 User terminal

# FIG. 45

```
                    ┌──────────┐
                    │  Start   │
                    └────┬─────┘
                         │
                         ▼
┌─────────────────────────────────────────────┐
│   Extract 1st source signal from mix signal  │──── S4501
└───────────────────────┬─────────────────────┘
                         │
                         ▼
┌─────────────────────────────────────────────┐
│          Extract 2nd source signal           │──── S4502
└───────────────────────┬─────────────────────┘
                         │
                         ▼
┌─────────────────────────────────────────────┐
│  Modify mix signal using 1st and 2nd source signals │──── S4503
└───────────────────────┬─────────────────────┘
                         │
                         ▼
                    ┌──────────┐
                    │   End    │
                    └──────────┘
```

# FIG. 46

```
        ( Start )
            │
            ▼
┌──────────────────────────┐
│   Extract source signal   │── S4601
└──────────────────────────┘
            │
            ▼
┌──────────────────────────┐
│ Source signal selected by user │── S4602
└──────────────────────────┘
            │
            ▼
┌──────────────────────────┐
│   Generate new mix signal │── S4603
└──────────────────────────┘
            │
            ▼
┌──────────────────────────────────────┐
│ Generate new side information on new mix signal │── S4604
└──────────────────────────────────────┘
            │
            ▼
┌──────────────────────────┐
│ Receive control information from user │── S4605
└──────────────────────────┘
            │
            ▼
┌──────────────────────────────────────┐
│ Generate remix signal using control information │── S4606
│ and new side information                         │
└──────────────────────────────────────┘
            │
            ▼
         ( End )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2006084916 A2